(19) Europäisches Patentamt
European Patent Office
Office européen des brevets

(11) **EP 3 343 241 A1**

(12) **EUROPEAN PATENT APPLICATION**

(43) Date of publication:
04.07.2018 Bulletin 2018/27

(51) Int Cl.:
*G01S 5/02* (2010.01)   *H04W 64/00* (2009.01)

(21) Application number: 17194808.6

(22) Date of filing: 04.10.2017

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA MD

(30) Priority: 04.10.2016 US 201615284613

(71) Applicant: Hitachi, Ltd.
Tokyo 100-8280 (JP)

(72) Inventors:
• SHIBATA, Takeshi
Santa Clara, CA 95054 (US)
• GAUR, Sudhanshu
Santa Clara, CA 95054 (US)

(74) Representative: Moore, Graeme Patrick et al
Mewburn Ellis LLP
City Tower
40 Basinghall Street
London EC2V 5DE (GB)

(54) **WIRELESS SENSOR NETWORK LOCALIZATION**

(57) In some examples, a computing device may receive sensed data information sent in a transmission by a first sensor, the sensed data information including a sensor identifier and sensed data of a first sensor. The computing device may associate a first timestamp with the sensed data information. Further, the computing device may receive, from other sensors, radio signal strength information including signal strength data related to the transmission and a second timestamp corresponding to detection of the transmission. The computing device may determine a location of the first sensor based on the signal strength data received from the other sensors. In addition, the computing device may associate the location with the sensor identifier of the first sensor based on comparing the first timestamp with the second timestamp. In some cases, one or more second sensors may forward the transmission from the first sensor to the computing device.

FIG. 1

**Description**

BACKGROUND

A wireless sensor network system may be used for gathering many different types of information. Several examples of information that may be obtained by such systems may include temperature, humidity, pressure, and so forth. In some instances, the sensors may be widely deployed and may be configured to send the sensed data gathered by each sensor to a management computer. The management computer may organize and analyze the gathered sensed data, such as for determining a result. In some cases, the result may depend on, or may otherwise relate to, the physical location of each of the sensors in the network. However, the sensors may move or may be moved, intentionally or unintentionally, and the location of one or more of the sensors in the system may not be known. Further, in conventional sensor networks, the sensors may not be able to detect their own locations by themselves, and it may be difficult to manage manually the individual locations of a large number of sensors.

SUMMARY

Some implementations include arrangements and techniques for determining locations of sensors in a sensor network. For instance, a computing device may receive sensed data information sent in a transmission by a first sensor. The sensed data information may include a sensor identifier and sensed data of the first sensor. The computing device may associate a first timestamp with the sensed data information. Further, the computing device may receive, from other sensors, radio signal strength information including signal strength data related to the transmission and a second timestamp corresponding to detection of the transmission. The computing device may determine a location of the first sensor based on the signal strength data received from the other sensors. In addition, the computing device may associate the location with the sensor identifier of the first sensor based on comparing the first timestamp with the second timestamp. Additionally, in some cases, one or more second sensors may forward the transmission from the first sensor to the computing device.

BRIEF DESCRIPTION OF THE DRAWINGS

The detailed description is set forth with reference to the accompanying figures. In the figures, the left-most digit(s) of a reference number identifies the figure in which the reference number first appears. The use of the same reference numbers in different figures indicates similar or identical items or features.

FIG. 1 illustrates an example architecture of a system including a plurality of sensors according to some implementations.
FIG. 2 illustrates an example sequence diagram according to some implementations.
FIG. 3 illustrates an example of signal properties according to some implementations.
FIG. 4 illustrates an example logical block diagram of a managed sensor according to some implementations.
FIG. 5 illustrates an example logical block diagram of a gateway computing device according to some implementations.
FIG. 6 is a flow diagram illustrating an example process for signal monitoring according to some implementations.
FIG. 7 is a flow diagram illustrating an example process for determining sensor locations according to some implementations.
FIG. 8 illustrates an example of triangulation according to some implementations.
FIG. 9 illustrates an example of trilateration according to some implementations.
FIG. 10 illustrates an example of triangulation according to some implementations.
FIG. 11 illustrates an example data structure of received sensed data according to some implementations.
FIG. 12 illustrates an example data structure of received signal strength data according to some implementations.
FIG. 13 illustrates example data structures for determining sensor locations according to some implementations.
FIG. 14 illustrates an example sequence diagram according to some implementations.
FIG. 15 is a flow diagram illustrating an example process for determining sensor locations according to some implementations.
FIG. 16 illustrates an example data structure of received sensed data according to some implementations.
FIG. 17 illustrates an example data structure of received signal strength data according to some implementations.
FIG. 18 illustrates example data structures for determining sensor locations according to some implementations.
FIG. 19 illustrates an example gateway computing device according to some implementations.
FIG. 20 illustrates an example managed sensor according to some implementations.
FIG. 21 illustrates an example management computing device according to some implementations.

DETAILED DESCRIPTION

Some implementations herein are directed to techniques and arrangements for a wireless sensor network system. The wireless sensor network system may include managed sensors that enable location information to be determined for other sensors in the system. The location information may be used when performing analysis on the sensed data received from the other sensors, such as when determining an analysis result from the sensed data. In some cases, the managed sensors may detect radio signal strength information that may be used subsequently to determine the location of the other sensors in the system, such as based on information about the radio signals received from the other sensors.

In some examples, the system may include two types of sensors, e.g., unmanaged sensors that may obtain sensed data and periodically transmit the sensed data wirelessly within the network; and managed sensors that may also obtain sensed data and periodically transmit the sensed data, and that further include a functionality to detect radio signal strength information with respect to the unmanaged sensors and transmit the radio signal strength information with a timestamp to a gateway computing device. As one example, the managed sensor may determine the angle at which a radio communication is received from an unmanaged sensor, such as to enable triangulation, and may also include a sensor component for measuring at least one other type of information such as temperature, pressure, etc.

Two or more managed sensors whose locations are known may receive radio signals from the unmanaged sensors and may forward the signal strength information to one or more gateway computing devices that are able to communicate with one or more management computing devices. The gateway computing device may determine the location of the unmanaged sensors based on the radio signal strength information received from two or more managed sensors. Further, the gateway computing device may record its own timestamp for use in determining the timing of the received radio signal information.

For discussion purposes, some example implementations are described in the environment of a network of wireless sensors able to communicate with each other, a gateway computing device, and a management computing device. However, implementations herein are not limited to the particular examples provided, and may be extended to other system configurations, other types of sensors, other types of computing devices, other types of environments, and so forth, as will be apparent to those of skill in the art in light of the disclosure herein.

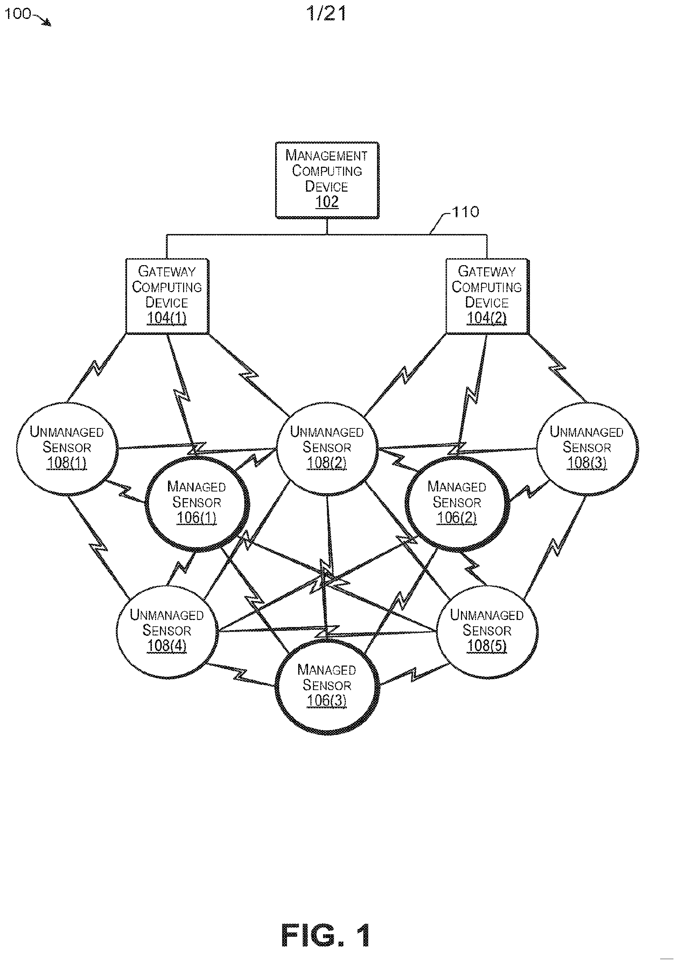

FIG. 1 illustrates an example architecture of a system 100 according to some implementations. The system 100 includes a management computing device 102, one or more gateway computing devices 104(1) and 104(2), a plurality of managed sensors 106(1), 106(2), and 106(3), and a plurality of unmanaged sensors 108(1), 108(2), 108(3), 108(4), and 108(5). Further, while this example shows only several managed sensors 106 and unmanaged sensors 108 for the sake of clarity, in other examples, there may be a much larger number of at least the unmanaged sensors 108.

The managed sensors 106, unmanaged sensors 108 and gateway computing device 104 may communicate wirelessly, such as through any suitable wireless communication protocol. Alternatively, in other examples, the gateway computing device 104 may be connected for wired communication with at least the managed sensors 106. Examples of wireless protocols that may be used in some examples herein include Wi-Fi (IEEE 802.11), including WI-FI DIRECT®, BLUETOOTH®, cellular, or combinations thereof.

Furthermore, the gateway computing device 104 may be connected for communication with the management computing device 102 through one or more networks 110. The one or more networks 110 may include any type of network, including a local area network (LAN), such as an intranet; a wide area network (WAN), such as the Internet; a wireless network, such as a cellular network, a local wireless network, such as Wi-Fi, and/or short-range wireless communications, such as BLUETOOTH®; a wired network including fiber optics, Ethernet, Fibre Channel, or any other such network, or any combination thereof. Accordingly, the one or more networks 110 may include both wired and/or wireless communication technologies. Components used for such communications can depend at least in part upon the type of network, the environment selected, or both. Protocols for communicating over such networks are well known and will not be discussed herein in detail.

In some examples, each sensor 106 or 108 in the system 100 may include the ability to transmit, receive, and forward radio signals to and from other sensors 106 or 108 and/or the gateway computing device 104. Thus, in some instances, the system 100 may operate as a fully connected network topology so that at least two managed sensors 106 receive transmissions from each unmanaged sensor 108. In such an example, each sensor 106 and 108 may communicate with the gateway computing devices 104 and other sensors through a single hop. Additionally, or alternatively, the system 100 may operate as a mesh network and may pass information using a message sending algorithm, such as flooding or other algorithm that ensures that at least two managed sensors 106 receive a transmission by an unmanaged sensor 108 in a single hop, and the gateway computing device receives the transmission either in a single hop or through multiple hops. Other suitable network topologies will be apparent to those of skill in the art having the benefit of the disclosure herein.

As mentioned above, the managed sensors 106 may include the ability to determine the signal strength of a radio transmission from another sensor. Additionally, in some examples, the managed sensors 106 may be able to determine a direction from which a radio transmission is received. The location of at least some of the managed sensors 106 may be fixed so that the physical location of the managed sensors 106 is known to the gateway computing device 104. On the other hand, the unmanaged sensors 108 may be movable in some examples, and therefore the managed sensors may be used to determine the respective physical locations of the unmanaged sensors 108. Further, in some examples, the managed sensors 106 may detect that another managed sensor 106 has been moved based on detected signal strength of the other managed sensor.

As one example, the managed sensors may determine the signal strength of transmissions from other sensors based on a received signal strength indicator (RSSI). RSSI provides a technique for a measurement of the power present in a received radio signal. For instance, in an IEEE 802.11 system, RSSI may be the relative received signal strength in a wireless environment. Thus, RSSI may provide an indication of the power level received by the managed sensor, such that a higher RSSI number indicates a stronger signal from the unmanaged sensor. As an example, if the RSSI value is determined on a scale of 0 to 100, where 100 is the maximum RSSI value, the managed sensor may determine one of 101 different signal strength levels at any point in time. Further, RSSI may be used to determine when the radio signal strength is below a certain threshold at which point the managed sensor may determine that the unmanaged sensor is not sending a transmission. In some cases, there may not be a standardized relationship of any particular physical parameter to the RSSI reading. However, a vendor or chipset maker may provide its own accuracy, granularity, and range for the actual signal strength measured, e.g., as milliwatts (mW) or decibel milliwatts (dBm).

Further, while RSSI is described herein as one example of a technique for determining signal strength in some IEEE 802.11 implementations herein, other techniques such as received channel power indicator (RCPI) or the like, may be used alternatively or in addition to RSSI for IEEE 802.11 implementations, and still other techniques may be used in the case of BLUETOOTH® or other wireless protocols. Accordingly, implementations herein are not limited to a particular technique for determining signal strength.

Additionally, in some cases, when multiple gateway computing devices 104(1) and 104(2) are used, the gateway computing devices 104(1) and 104(2) may be able to communicate with each other over the one or more networks 110 or through a direct wired or wireless connection, such as for coordinating processing of signal strength information for determining location information of respective unmanaged sensors. For instance, if the first gateway computing device 104(1) receives, from the first managed sensor 106(1), signal strength information about the unmanaged sensor 108(2), and the second gateway computing device 104(2) receives, from the second managed sensor 106(2), signal strength information about the unmanaged sensor 108(2), the second gateway computing device may send the signal strength information received from the second managed sensor 106(2) to the first gateway computing device 104(1), and the first gateway computing device may determine the location of the unmanaged sensor 108(2).

Alternatively, in other examples, each of the gateway computing devices 104(1) and 104(2) may receive all communications issued by all managed sensors 106, and one of the gateway computing devices 104(1) or 104(2) may be configured to perform the location calculations. As another alternative, both of the gateway computing devices 104(1) and 104(2) may be configured to perform the location calculations. As still another alternative, the first gateway computing device 104(1) may be configured to perform the location calculations for one half of the unmanaged sensors and the second gateway computing device 104(2) may be configured to perform the location calculations for the other half of the unmanaged sensors, or the like.

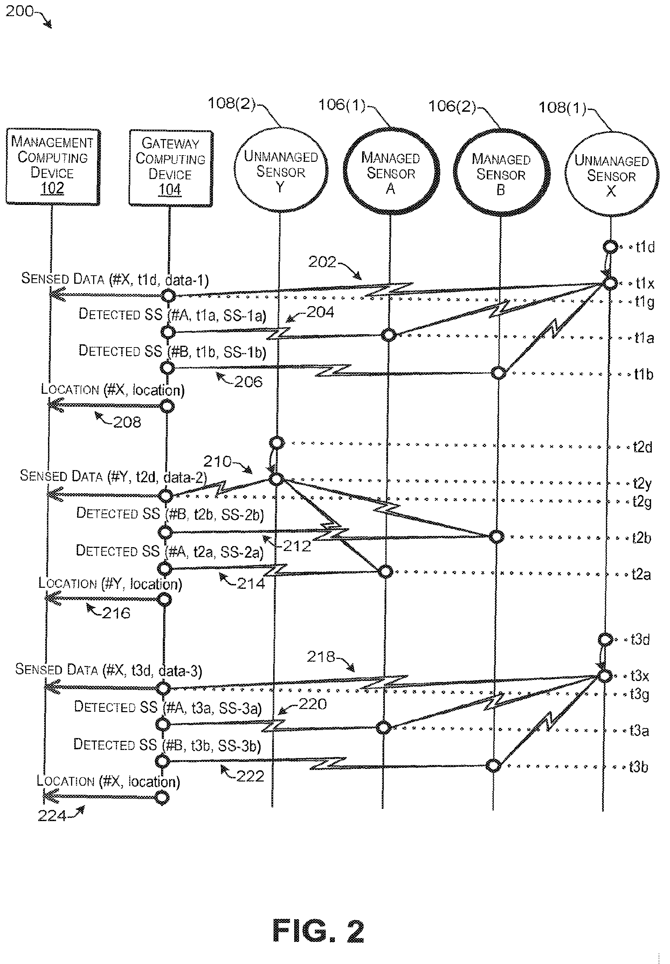

FIG. 2 illustrates an example sequence diagram 200 according to some implementations. For instance, this example may correspond to a single hop wireless sensor network in that the sensors 106(1), 106(2), 108(1), and 108(2) are able to communicate directly with the gateway computing device 104; however, at least two managed sensors 106(1) and 106(2) are within range to receive radio communications from the unmanaged sensors 108(1) and 108(2).

In this example, suppose that an unmanaged sensor 108(1) having a sensor identifier (ID) "X" sends a first transmission 202 of sensed data information that may include sensed data, a timestamp associated with the sensed data, and the sensor ID. For instance, if the sensor 108(1) is a temperature sensor, the unmanaged sensor 108(1) may send the transmission 202 that includes an indication of the detected temperature (e.g., temperature detected just prior to sending, average temperature detected over a period of time prior to sending, or the like), indicated as "data-1" in this example. Further, the transmission may include a timestamp of when the temperature measurement is taken (or completed being taken), i.e., "t1d", and the sensor ID, i.e., "X" in this example. In some cases, the sensor ID may be an assigned ID, such as an ID that is unique or otherwise individually distinguishable within the system 100. Additionally, or alternatively, a respective IP address associated with each sensor may be used as the sensor ID. Further, suppose that the unmanaged sensor 108(1) sends the transmission 202 at time t1x.

The gateway computing device 104 may receive the transmission 202 from the unmanaged sensor 108(1), and may forward the sensed data information included in the transmission 202 to the management computing device 102. In addition, the gateway computing device 104 may record its own timestamp of the time "t1g" at which the gateway computing device 104 received the transmission 202 from the unmanaged sensor 108(1).

Some of the managed sensors 106 that are located near the unmanaged sensor 108(1) may also detect the radio signal of the transmission 202. Thus, in addition to the gateway computing device 104 receiving the communication 202, one or more managed sensors 106 may also receive the transmission 202 and/or may otherwise detect the signal strength of the transmission 202. For instance, the first managed sensor 106(1) may have a sensor ID "A" in this example, and may detect the signal strength of the transmission at a time "t1a". Further, the second managed sensor 106(2) may have a sensor ID "B", and may detect the signal strength of the transmission 202 at a time "t1b".

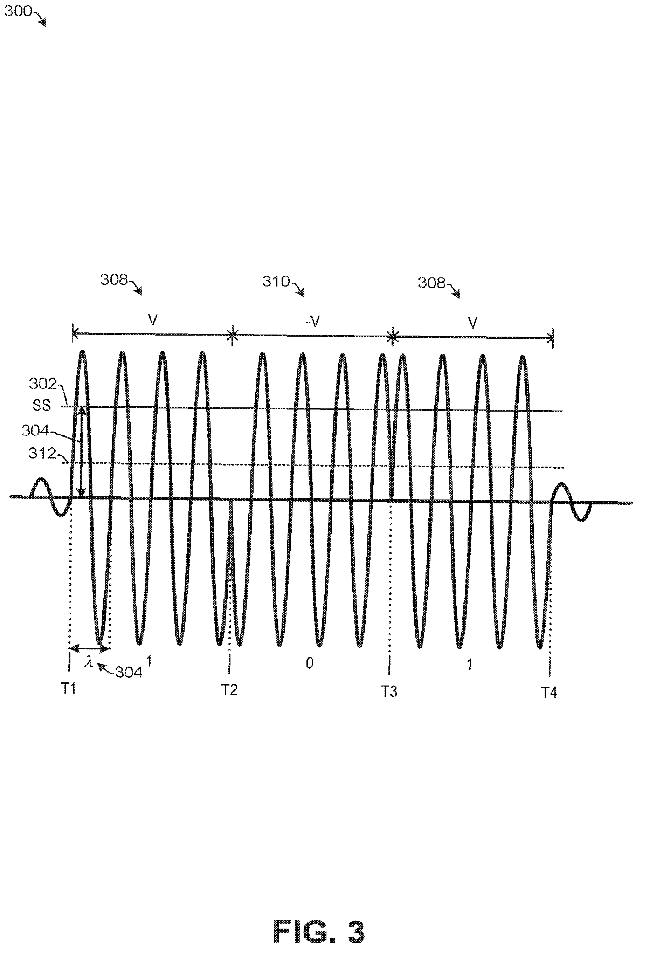

In this example, the first managed sensor 106(1) and the second managed sensor 106(2) may each send signal strength information to the gateway computing device 104, along with respective timestamps of when the signal strength was detected, and respective sensor IDs of the respective managed sensors 106(1) and 106(2). Thus, the first managed sensor 106(1) may send a communication 204 that includes the sensor ID "A", the timestamp "t1a" of when the first managed sensor 106(1) detected the signal strength of the transmission 202, and the signal strength information "SS-1a". Similarly, the second managed sensor 106(2) may send a communication 206 that includes the sensor ID "B", the timestamp "t1b" of when the second managed sensor 106(2) detected the signal strength of the transmission 202, and the signal strength information "SS-1b". Further, in the case that the gateway computing device 104 also includes functionality for detecting the signal strength of the transmission 202 from the unmanaged sensor 108(1), then one of the managed sensors 106(1) or 106(2) may not be needed for determining the location of the unmanaged sensor 108(1). Additionally, the signal strength information may include several other signal properties, as discussed additionally below with respect to, e.g., FIG. 3.

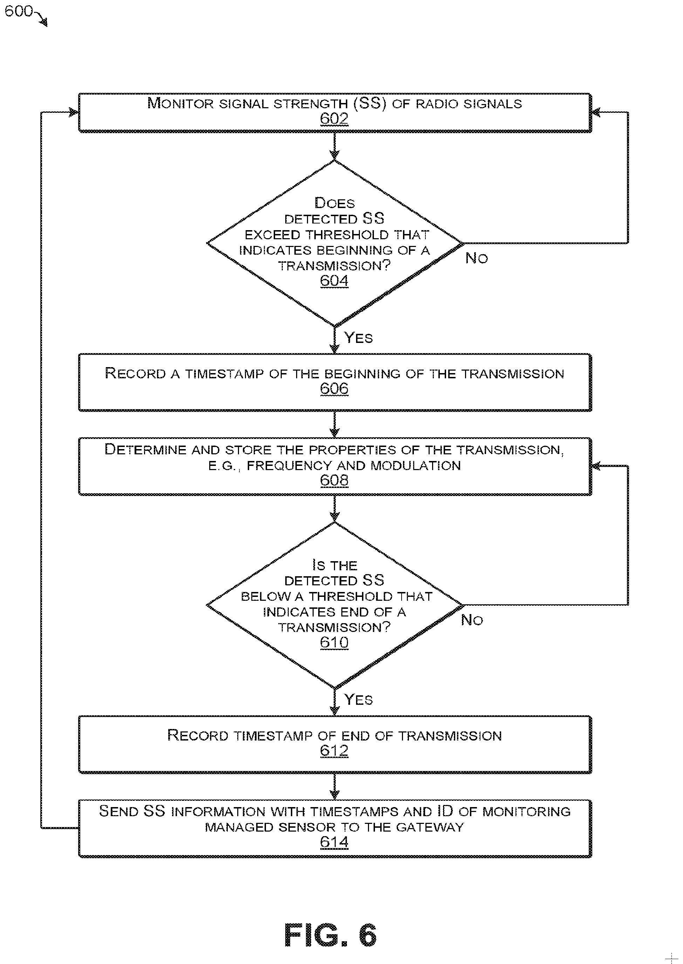

In some cases, the respective timestamps t1a and t2a measured on the managed sensors 106(1) and 106(2), respectively, may include single timestamps of when the signal strength is detected. Alternatively, in some cases, the respective timestamps t1a and t2a measured on managed sensors 106(1) and 106(2), respectively, may include timestamps of the beginning and the ending of the signal detection, as discussed additionally below, e.g., with respect to FIG. 6, to indicate a length of the transmission in units of time.

The gateway computing device 104 may receive the communications 204 and/or 206 from the managed sensors 106(1) and 106(2), respectively, and may associate the received sensed data, data-1, with the detected signal strength(s) (detected SS) based at least in part on comparing the timestamp t1g recorded at the gateway computing device 104 with the timestamps t1a and/or t1b recorded at the management sensors 106(1) and 106(2), respectively. For example, if t1g, t1a, and t1b are approximately the same time (e.g., within a threshold time), then the detected SS information received from the managed sensors 106(1) and 106(2) may be associated with the sensed data received by the gateway computing device 104 from the unmanaged sensor 108(1) based on a high likelihood that they correspond to the same radio signal.

As discussed additionally below, the gateway computing device 104 may determine the location of the unmanaged sensor 108(1) based on the received detected signal strength information. The gateway computing device 104 may send the location information to the management computing device 102 in a transmission 208 for use in determining an analysis result based at least in part on the sensed data. Alternatively, the gateway computing device 104 may forward the detected SS information from communications 204 and 206 to the management computing device 102, and the management computing device 102 may perform the processing to determine the location of the unmanaged sensor 108(1).

Subsequently, at time t2d, suppose that the second unmanaged sensor 108(2), having a sensor ID "Y", measures or otherwise receives sensed data "data-2". The second unmanaged sensor 108(2) may send the sensed data to the gateway computing device 104 in a transmission 210 at a time t2y, including the timestamp t2d and the sensor ID Y. The gateway computing device 104 may receive the transmission at a time t2g, and may forward the sensed data data-2, the sensor ID Y, and the timestamp t2d to the management computing device 102.

In addition to the gateway computing device 104 receiving the transmission 210, one or more of the managed sensors 106(1) and 106(2) may also receive the transmission 210 and/or may otherwise detect the signal strength of the transmission 210. For instance, the first managed sensor 106(1) may detect the signal strength of the transmission 210 at a time "t2a". Further, the second managed sensor 106(2) may detect the signal strength of the transmission 210 at a time "t2b". In this example, the first managed sensor 106(1) and the second managed sensor 106(2) may each send signal strength information to the gateway computing device 104, along with respective timestamps of when the signal strength was detected, and respective sensor IDs of the respective managed sensors 106(1) and 106(2). Thus, the second managed sensor 106(2) may send a communication 212 that includes the sensor ID "B", the timestamp "t2b" of when the second managed sensor 106(2) detected the signal strength of the transmission 210, and the signal strength information "SS-2b". Similarly, the first managed sensor 106(1) may send a communication 214 that includes the sensor ID "A", the timestamp "t2a" of when the first managed sensor 106(1) detected the signal strength of the transmission 210, and the signal strength information "SS-2a". Further, in the case that the gateway computing device 104 also includes functionality for detecting the signal strength of the transmission 210 from the unmanaged sensor 108(2), then one of the managed sensors 106(1) or 106(2) may not be needed for determining the location of the second unmanaged sensor 108(2).

The gateway computing device 104 may receive the communications 212 and/or 214 from the managed sensors 106(1) and 106(2), respectively, and may associate the received sensed data, data-2, with the detected signal strength(s) (detected SS) based at least in part on comparing the timestamp t2g recorded at the gateway computing device 104 with the timestamps t2a and/or t2b recorded at the management sensors 106(1) and 106(2), respectively. For example, if t2g, t2a, and t2b are approximately the same time (e.g., within a threshold time of each other), then the detected SS information SS-2a and SS-2b received from the managed sensors 106(1) and 106(2), respectively, may be associated with the sensed data data-2 received by the gateway computing device 104 from the unmanaged sensor 108(2) based on a high likelihood that they correspond to the same radio signal.

As discussed additionally below, the gateway computing device 104 may determine the location of the second unmanaged sensor 108(2) based on the received detected signal strength information SS-2a and SS-2b. The gateway computing device 104 may send the location information to the management computing device 102 in a transmission 216 for use in determining an analysis result based at least in part on the sensed data. Alternatively, the gateway computing device 104 may forward the detected SS information from communications 212 and 214 to the management computing device 102, and the management computing device 102 may perform the processing to determine the location of the second unmanaged sensor 108(2).

Subsequently, at time t3d, suppose that the first unmanaged sensor 108(1) measures or otherwise receives sensed data "data-3". The first unmanaged sensor 108(1) may send the sensed data to the gateway computing device 104 in a transmission 218 at time t3x, including the timestamp t3d and the sensor ID X. The gateway computing device 104 may receive the transmission at a time t3g, and may forward the sensed data data-3, the sensor ID X, and the timestamp t3d to the management computing device 102.

In addition to the gateway computing device 104 receiving the transmission 218, one or more of the managed sensors 106(1) and 106(2) may also receive the transmission 218 and/or may otherwise detect the signal strength of the transmission 218. For instance, the first managed sensor 106(1) may detect the signal strength of the transmission 218 at a time "t3a". Further, the second managed sensor 106(2) may detect the signal strength of the transmission 218 at a time "t3b". In this example, the first managed sensor 106(1) and the second managed sensor 106(2) may each send signal strength information to the gateway computing device 104, along with respective timestamps of when the signal strength was detected, and respective sensor IDs of the respective managed sensors 106(1) and 106(2). Thus, the first managed sensor 106(1) may send a communication 220 that includes the sensor ID "A", the timestamp "t3a" of when the first managed sensor 106(1) detected the signal strength of the transmission 218, and the signal strength information "SS-3a". Similarly, the second managed sensor 106(2) may send a communication 222 that includes the sensor ID "B", the timestamp "t3b" of when the second managed sensor 106(2) detected the signal strength of the transmission 218, and the signal strength information "SS-3b". Further, in the case that the gateway computing device 104 also includes functionality for detecting the signal strength of the transmission 218 from the unmanaged sensor 108(2), then one of the managed sensors 106(1) or 106(2) may not be needed for determining the location of the second unmanaged sensor 108(2).

The gateway computing device 104 may receive the communications 220 and/or 222 from the managed sensors 106(1) and 106(2), respectively, and may associate the received sensed data, data-3, with the detected signal strength(s) (detected SS) SS-3a and SS-3b based at least in part on comparing the timestamp t3g recorded at the gateway computing device 104 with the timestamps t3a and/or t3b recorded at the management sensors 106(1) and 106(2), respectively. For example, if t3g, t3a, and t3b are approximately the same time (e.g., within a threshold time of each other), then the detected SS information SS-3a and SS-3b received from the managed sensors 106(1) and 106(2), respectively, may be associated with the sensed data data-3 received by the gateway computing device 104 from the unmanaged sensor 108(1) based on a high likelihood that they correspond to the same radio signal.

As discussed additionally below, the gateway computing device 104 may determine the current location of the first managed sensor 108(1) based on the received detected signal strength information SS-3a and SS-3b. The gateway computing device 104 may send the location information to the management computing device 102 in a transmission 224 for use in determining an analysis result based at least in part on the sensed data. Alternatively, the gateway computing device 104 may forward the detected SS information from communications 220 and 222 to the management computing device 102, and the management computing device 102 may perform the processing to determine the location of the first unmanaged sensor 108(1).

FIG. 3 illustrates an example diagram of signal properties of a signal 300 according to some implementations. For instance, the detected signal strength of the signal 300 may be a measurement of the power present in a received radio signal. In the diagram of FIG. 3, the signal strength SS 302 is illustrated as the mean (average) of the signal strength having a value 304. For instance, as indicated at 306, the signal 300 may have a frequency lambda ($\lambda$) and the signal during a given frequency may be recognized as a numeric value of a digital signal such as 1 and 0 by the difference of the phase shown as V and -V, as indicated at 308 and 310, respectively. In some examples, a beginning time T1 is determined when the signal strength SS is more than a threshold 312 and an ending time T4 may be determined when signal strength SS is less than a threshold, such as the threshold 312 or some other threshold. Accordingly, the length of time of the transmission may be determined based on the difference between T4 and T1. The modulation that is a pattern of the digital signal 300 may be used to recognize the type of data transmission protocol such as wireless LAN, LTE (long-term evolution), or the like. In some examples, signal properties, such as length of transmission, type of transmission, frequency, and the like may be used for associating sensed data information with signal strength information in addition to, or as an alternative to the timestamps herein.

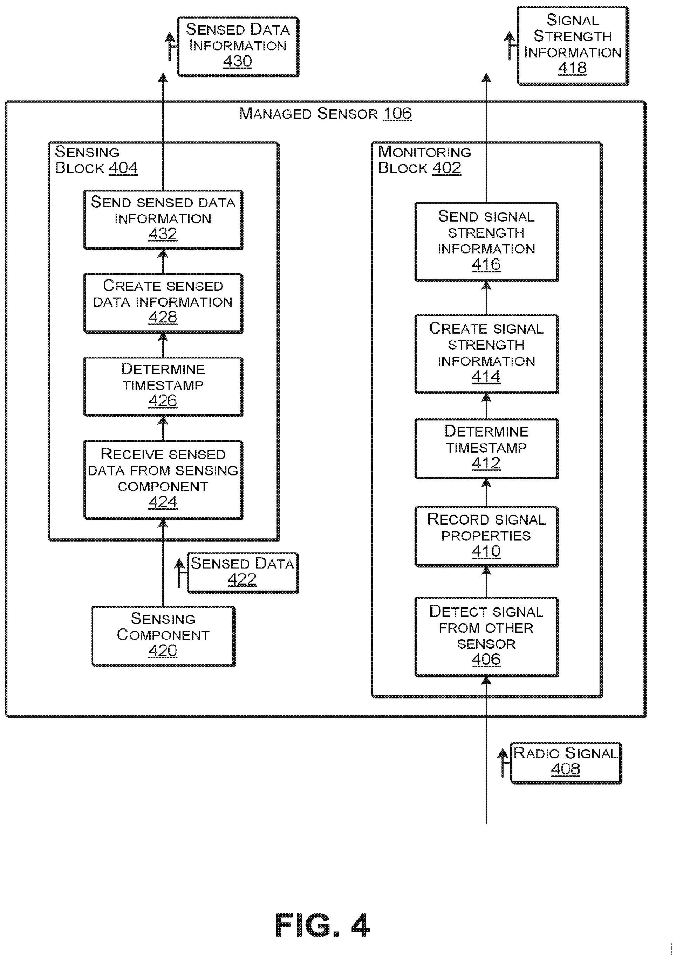

FIGS. 4-7 and 15 include flow diagrams illustrating example processes according to some implementations. The processes are illustrated as collections of blocks in logical flow diagrams, which represent a sequence of operations, some or all of which may be implemented in hardware, software or a combination thereof. In the context of software, the blocks may represent computer-executable instructions stored on one or more computer-readable media that, when executed by one or more processors, program the processors to perform the recited operations. Generally, computer-executable instructions include routines, programs, objects, components, data structures and the like that perform particular functions or implement particular data types. The order in which the blocks are described should not be construed as a limitation. Any number of the described blocks can be combined in any order and/or in parallel to implement the process, or alternative processes, and not all of the blocks need be executed. For discussion purposes, the processes are described with reference to the environments, frameworks and systems described in the examples herein, although the processes may be implemented in a wide variety of other environments, frameworks and systems.

FIG. 4 illustrates an example logical block diagram of a managed sensor 106 according to some implementations. The managed sensor 106 in this example includes a monitoring block 402 and a sensing block 404, each of which may correspond to an algorithm including a plurality of operations. The monitoring block 402 is configured to monitor radio signals around the managed sensor 106 and send information about the monitored signals to, e.g., the gateway computing device. Accordingly, as indicated at 406, the managed sensor 106 may be configured to detect or otherwise receive a radio signal 408, such as from another sensor (not shown in FIG. 4).

At 410, the managed sensor may record the signal properties of the detected signal. For example, as discussed above, the managed sensor may determine the mean signal strength of the detected radio signal 408.

At 412, the managed sensor determines a timestamp to apply to the detected signal 408. For example, the managed sensor may include a clock or the like to enable the managed sensor to determine and apply a timestamp when the signal 408 is detected.

At 414, the managed sensor may create signal strength information to be sent to the gateway computing device. For instance, the managed sensor may packetize or otherwise prepare to send the signal strength information, the timestamp, and the ID of the managed sensor.

At 416, the managed sensor may send the signal strength information 418. For example, the signal strength information 418 may be sent to the gateway computing device and/or to other sensors or other nodes in the system. In some examples, the signal strength data may include signal properties, such as a length of the signal in units of time, a frequency, modulation, or the like.

The sensing block 404 configures the managed sensor 106 for sensing and transmitting measurements or other information provided by a sensing component 420, such as temperature, pressure, sound, light, motion, or other sensed data 422.

At 424, the managed sensor obtains or otherwise receives the sensed data 422 from the sensing component 420.

At 426, the managed sensor determines a timestamp to be applied to the sensed data 422. For example, managed sensor may include a clock to enable the managed sensor to determine and apply a timestamp to the sensed data 422 received from the sensing component 420.

At 428, the managed sensor may create sensed data information 430 such as by packetizing or otherwise preparing for transmission the sensed data 422, the timestamp, and the ID of the managed sensor.

At 432, the managed sensor may transmit or otherwise send the sensed data information 430. For example, the sensed data information 432 may be sent to the gateway computing device and/or to another sensor or other node in the system. In some examples, the gateway may be configured to receive the sensed data information 430, and forward the sensed data information 430 to the management computing device.

In some examples, if the managed sensor 106 is used only for detecting radio signals of the unmanaged the sensors 108, then the sensing block 404 may be omitted from the managed sensor 106. Furthermore, the unmanaged sensors 108 herein may include the sensing block 404, but may not include the monitoring block 402. Alternatively, in some examples, all the sensors in the system may be managed sensors 106 that include both the sensing block 404 and the monitoring block 402.

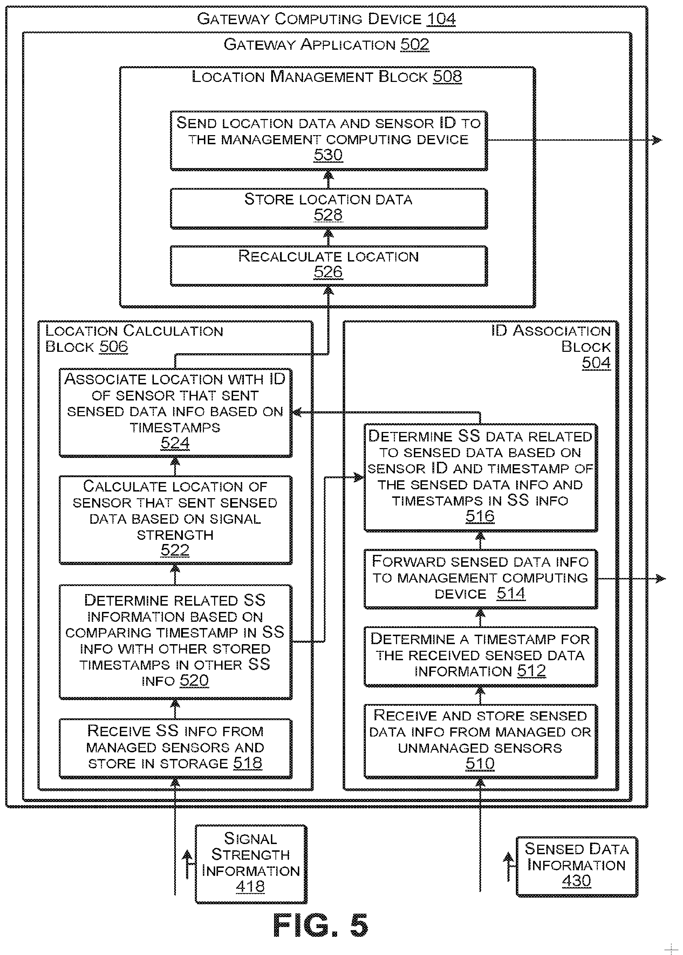

FIG. 5 illustrates an example logical block diagram of a gateway computing device 104 according to some implementations. In this example, the gateway computing device 104 includes a gateway application 502 that includes a location calculation block 504, and ID association block 506, and a location management block 508.

At 510, the gateway computing device may receive and store the sensed data information 430 sent from a managed sensor or an unmanaged sensor.

At 512, the gateway computing device may determine a timestamp for the received sensed data information.

At 514, the gateway computing device may forward the received sensed data information to the management computing device.

At 516, the gateway computing device may determine signal strength information related to the received sensed data information 430 based on comparing timestamps. For example, the gateway timestamp associated with the received sensed data information may be compared with timestamps included in received signal strength information to determine timestamps within a threshold time of each other. For instance, based on the system and the frequency of sensor reporting, the time threshold may depend at least partially, on how closely the clocks of the sensors are synchronized with the gateway clock. By determining associated timestamps, the gateway computing device is able to associate the sensor ID of the sensor that sent the sensed data information 430 with signal strength information that can be used to determine the location of the sensor that sent the sensed data information 430.

At 518, in the location calculation block, the gateway computing device may receive and store signal strength information 418 from the managed sensors. In some cases, the gateway computing device may receive signal strength information 418 from two or more managed sensors for each transmission of sensed data by an unmanaged sensor or managed sensor.

At 520, the gateway computing device may determine related SS information based on comparing timestamp information with other stored timestamps of other received signal strength information to determine timestamps within a threshold time of each other. By determining timestamps within a threshold time of each other, the gateway computing device is able to determine signal strength information received from multiple managed sensors related to the same transmission of sensed data from a particular sensor. Thus, in some examples, there may be three or more timestamps within the threshold time of each other, i.e., a timestamp of the gateway computing device for receipt of the sensed data information, a timestamp of a first managed sensor indicating detection of the signal strength of the transmission of the sensed data information; and a timestamp of a second management sensor indicating the detection of the signal strength of the transmission of the sensed data information.

At 522, the gateway computing device may calculate the location of the sensor that sent the sensed data information 430 based on the signal strength information 418 received from the managed sensors.

At 524, the gateway computing device may associate the calculated location information with the ID of the sensor that sent the sensed data information 430. The location calculation block may forward the location and the sensor ID to the location management block 508.

At 526, in the location management block, the gateway computing device may recalculate the location of the sensor that sent the sensed data information 430 based on the location information received from the location calculation block 506. For example, if the location of the sensor is close to previous locations (e.g., within a threshold distance), the location of identified sensor may be recalculated (e.g., by determining a mean (average)) based on one or more locations previously determined for the targeted sensor. On the other hand, if the location of the identified sensor is substantially different from a previous location, recalculation might not be performed.

At 528, the gateway computing device may store the determined location (either recalculated or not) for the identified sensor.

At 530, the gateway computing may send the location data and the sensor ID to the management computing device. Alternatively, in some examples, one or more of the ID association block 504, location calculation block 506, or location management block 508 may be executed on the management computing device. Other variations will be apparent to those of skill in the art having the benefit of the disclosure herein.

FIG. 6 is a flow diagram illustrating an example process 600 for signal monitoring according to some implementations. In some examples, the process 600 may be executed by a managed sensor or other suitable computing device for monitoring signal strengths of transmissions by other sensors in the sensor network. For instance, radio signals from unmanaged sensors may be monitored to check whether the signal strength is more than a threshold amount that indicates the beginning of transmission of sensed data. If the signal strength is more than the threshold level, then the managed sensor may record a timestamp corresponding to the beginning of the transmission. Further, the managed sensor may monitor and record the properties of the radio signal, such as frequency and modulation. When the signal strength becomes less than the threshold that indicates the end of the transmission, and in some cases, the managed sensor may record timestamp of the ending of the transmission. The managed sensor may send the signal strength information to the gateway computing device. In some examples, the process 600 may be executed by the monitoring block 402 of FIG. 4.

At 602, the managed sensor may monitor the signal strength (SS) of radio signals from other sensors in the sensor network.

At 604, the managed sensor may determine whether the detected signal strength exceeds a threshold that indicates the beginning of a transmission. If not, the process returns to 602 to continue monitoring; if so, the process goes to block 606.

At 606, when the beginning of a transmission is detected, the managed sensor may record a timestamp for the beginning of the transmission.

At 608, the managed sensor may determine and store the properties of the transmission, e.g., frequency and modulation.

At 610, the managed sensor may determine whether the detected signal strength has fallen below a threshold that indicates the end of the transmission. If not, the process returns to 608 to continue determining and storing the properties of the transmission; if so, the process goes to 612.

At 612, the managed sensor may record a timestamp corresponding to the end of the transmission. In some examples, the first timestamp and the second timestamp may be used to determine the length of the transmission in units of time.

At 614, the managed sensor may send the signal strength information to the gateway computing device and/or to another node in the system. For instance, the signal strength information may include the radio signal properties of the transmission with a timestamp of the beginning and a timestamp of the ending, and ID of the managed sensor that performed the monitoring and is sending the signal strength information.

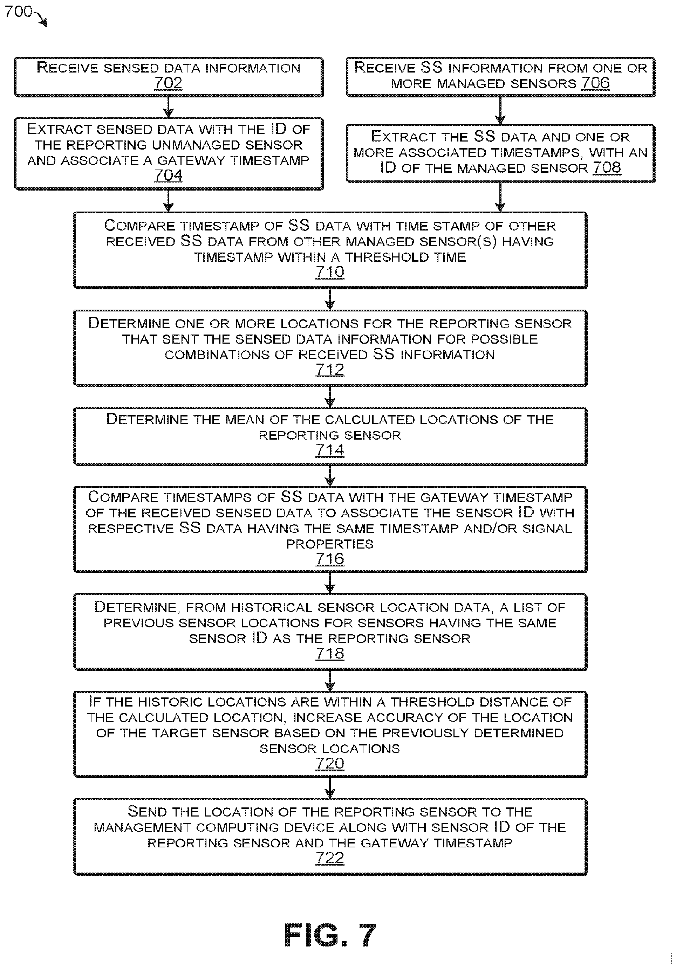

FIG. 7 is a flow diagram illustrating an example process 700 for determining a sensor location according to some implementations. In some examples, the process 700 may be executed by gateway application 502 on the gateway computing device 104 or other suitable computing device for calculating the location of a sensor that sent a transmission including sensed data. As discussed above, the signal strength information may include one or more timestamps and the ID of the managed sensor that detected the signal strength. Further, sensed data information may be received with a sensor ID, and the computing device may generate a timestamp for the received sensed data. The gateway timestamp given to the sensed data is used to associate the received sensed data with the received signal strength information based on associated timestamps. The location of the identified reporting sensor is calculated using a geometric method, such as triangulation, trilateration, or the like. In some examples, the location of identified sensor may be calculated as mean (average) of several locations calculated with a subset of signal strength data (e.g., a combination of data in the case of trilateration) with same timestamps and properties of signal. The ID of the sensor is associated with the location based on the same timestamp recorded at the gateway as timestamps recorded at the managed sensors. Further, in some examples, historical data of locations previously calculated for the same sensor ID may be determined and used during recalculation of the location of the identified sensor, e.g., based on a mean, or the like.

At 702, the computing device may receive sensed data information sent by a reporting unmanaged sensor. For example, the sensed data information may include the sensed the data, a sensor ID of the reporting sensor that sent the sensed data and a timestamp corresponding to when the data was sensed by the reporting sensor. Further, in some examples, such as in the case that a managed sensor is movable, the process 700 may also be applied to a managed sensor as the reporting sensor.

At 704, the computing device may extract the sensed data with the sensor ID of the reporting sensor, the timestamp at which the data was sensed, and may further associate a gateway timestamp with the sensed data.

At 706, the computing device may receive signal strength information from one or more managed sensors. For example, if the gateway computing device is also able to determine signal strength information, then receiving signal strength information from at least one other managed sensor may be sufficient. On the other hand, if the gateway computing device is not able to determine signal strength information, then signal strength information may be received from at least two or more managed sensors.

At 708, the computing device may extract, from the signal strength information, the signal strength data, one or more associated timestamps, and an ID of the managed sensor that sent the signal strength information.

At 710, the computing device may compare a timestamp of the SS data with the time stamps of other received SS data from other managed sensors to locate SS data having timestamps within a threshold time of each other. Accordingly, the SS data having timestamps within a threshold time may be assumed to correspond to the same sensed data transmission and therefore are assumed to be indicative of the location of the reporting sensor.

At 712, the computing device may determine one or more locations for the reporting sensor that sent the sensed data information based on possible combinations of the received SS information. For example, if signal strength information is received from three or more managed sensors, then techniques discussed below such as triangulation, trilateration, or the like, may be used to determine, from multiple different combinations of the signal strength information, a plurality of indicated locations of the reporting sensor.

At 714, the computing device may determine the mean of the calculated locations of the reporting sensor. For example, when multiple different locations are determined from the multiple different combinations of signal strength information, the computing device may determine the mean of the multiple locations as the determined location of the reporting sensor.

At 716, the computing device may compare timestamps of SS data with the gateway timestamp of the received sensed data to associate the sensor ID with respective SS data having the same timestamp, e.g., within the threshold time of each other. Alternatively, in some examples, rather than relying on comparison of the timestamps, each managed sensor may include the sensor ID of the transmitting unmanaged sensor with the signal strength information sent to the gateway computing device and/or signal properties of the signal. Thus, the gateway computing device may be able to determine the association of the signal strength information with the sensed data and reporting sensor ID through other techniques in addition to or as an alternative to comparison of timestamps.

At 718, the computing device may determine, from historical sensor location data, a list of previous sensor locations for sensors having the same sensor ID as the reporting sensor.

At 720, if the historic locations are within a threshold distance of the calculated location, the computing device may increase accuracy of the location of the reporting sensor based on the previously determined sensor locations. For example, if the historic locations for the reporting sensor are within the threshold distance (e.g., within a threshold tolerance based on the actual distances between sensors in the network), then the reporting sensor may be assumed to have not been moved from the previously determined locations. Accordingly, the current calculated location may be averaged with the previously determined locations to determine a new current location of the reporting sensor. On the other hand, if the historic locations are not within the threshold distance of the current calculated location, then the reporting sensor may be assumed to have been moved from the previous location and the historic locations of the reporting sensor might not be used to improve the accuracy of the current calculated location.

At 722, the computing device may send the location of the reporting sensor to the management computing device along with the sensor ID of the reporting sensor and the gateway timestamp. For example, the gateway timestamp may indicate the time at which the location of the reporting sensor was determined.

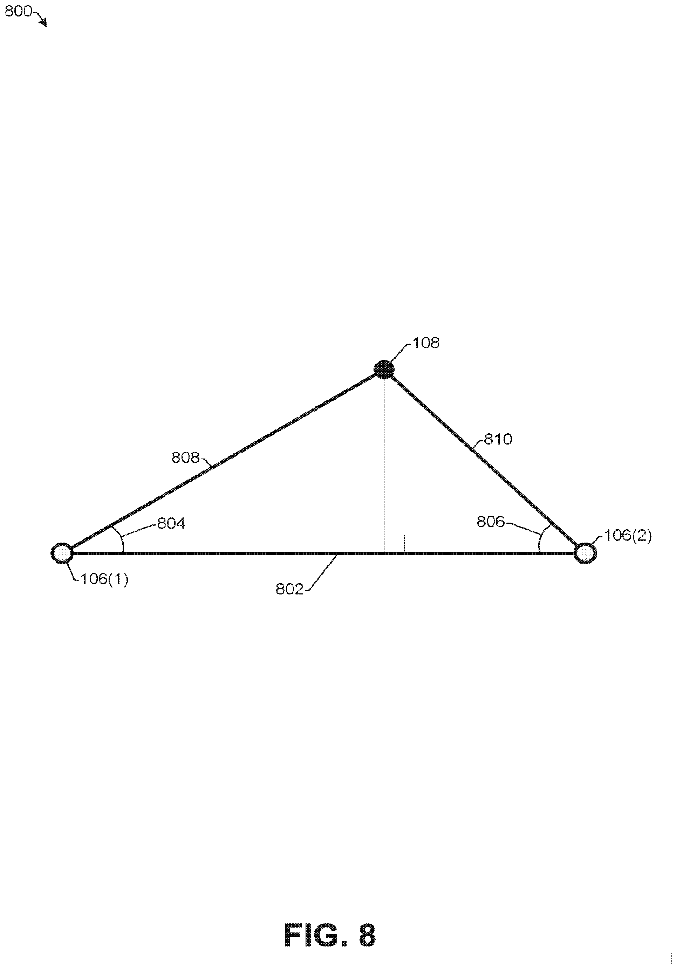

FIG. 8 illustrates an example 800 of triangulation according to some implementations. For example, triangulation may employ distances and angles from two points whose locations are known for determining the location of a third point. Additionally, as one example, RSSI information may scale linearly with the logarithm of distance and thus it is possible to determine the distance of a reporting sensor by measuring the strength of the reporting sensor radio signal. Further, the direction from which a signal is received may also be determined in some implementations based on the antenna configuration of the managed sensors.

In the illustrated example, suppose a first managed sensor 106(1) and a second managed sensor 106(2) are in fixed positions and therefore are in known locations and are a known distance 802 from each other. Furthermore, based on signal strength information that includes directional information received by the first managed sensor 106(1) and the second managed sensor 106(2) with respect to the radio signal from an unmanaged sensor 108, it is possible to determine a first angle 804 and a second angle 806, as well as a first distance 808, and a second distance 810. Since not all of this information is needed to determine the location of the unmanaged sensor 108 with respect to the managed sensors 106(1) and 106(2), several different locations for the unmanaged sensor 108 may be determined based on various combinations of the distances 808, 810 and angles 804, 806 measured. Accordingly, the calculated location of the unmanaged sensor may be determined as an average of the calculated locations, or may be determined by another suitable function based on the determined accuracy of the angle measurement vs. the distance measurement.

As one example, it is known in the art that the average received signal strength at any point decays as a power law of the distance of separation between a transmitter and a receiver. Accordingly, in the case of RSSI, the distance between an unmanaged sensor and a managed sensor may be calculated from a measured signal strength (e.g., in dBm) based on the following equation:

$$RSSI[dBm] = -N \log Distance + A, \qquad (EQ1)$$

where N and A are constant parameters for the system. Further, while one example technique for determining the distance between a transmitter and a receiver based on measured signal strength is described herein, other techniques will be apparent to those of skill in the art having the benefit of the disclosure herein.

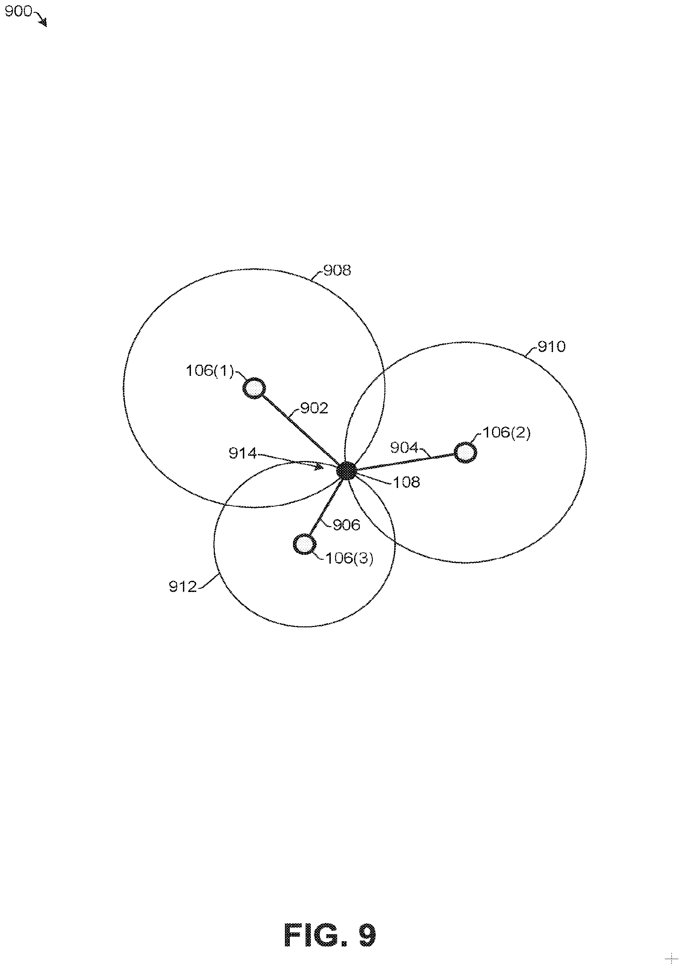

FIG. 9 illustrates an example 900 of trilateration according to some implementations. Trilateration includes determining the location of a point based on distances from three points whose locations are known. For example, trilateration may be used to determine the location of an unmanaged sensor 108 relative to three managed sensors 106(1), 106(2), and 106(3), whose locations are known. In contrast to triangulation, trilateration does not involve the measurement of angles, and therefore the managed sensors 106 in this example may include a simple antenna that does not indicate the direction from which the signal is received and/or do not include radio direction finding capability.

Based on measured signal strengths of the transmission from the unmanaged sensor 108 received by the managed sensors 106(1), 106(2) and 106(3), the gateway computing device may determine the distance to the unmanaged sensor 108 from each of the managed sensors 106(1), 106(2) and 106(3). Thus, based on detected signal strengths, the first managed sensor 106(1) may be determined to be a first distance 902 from the unmanaged sensor 108; the second managed sensor 106 may be determined to be a second distance 904 from the unmanaged sensor 108; and the third managed sensor 106 may be determined to be a third distance 906 from the unmanaged sensor 108. Each of these distances 902, 904, and 906 may be expressed as the radius of a respective circle 908, 910, and 912, having the respective managed sensor 106(1), 106(2) or 106(3) at the center. The intersection 914 of the three circles 908, 910, and 912 may be determined to be the location of the unmanaged sensor 108. If there are more than three managed sensors reporting the signal strength information of the unmanaged sensor 108, then there may be multiple intersections corresponding to multiple detected locations, and the multiple locations may be averaged to determine the final calculated location of the unmanaged sensor 108.

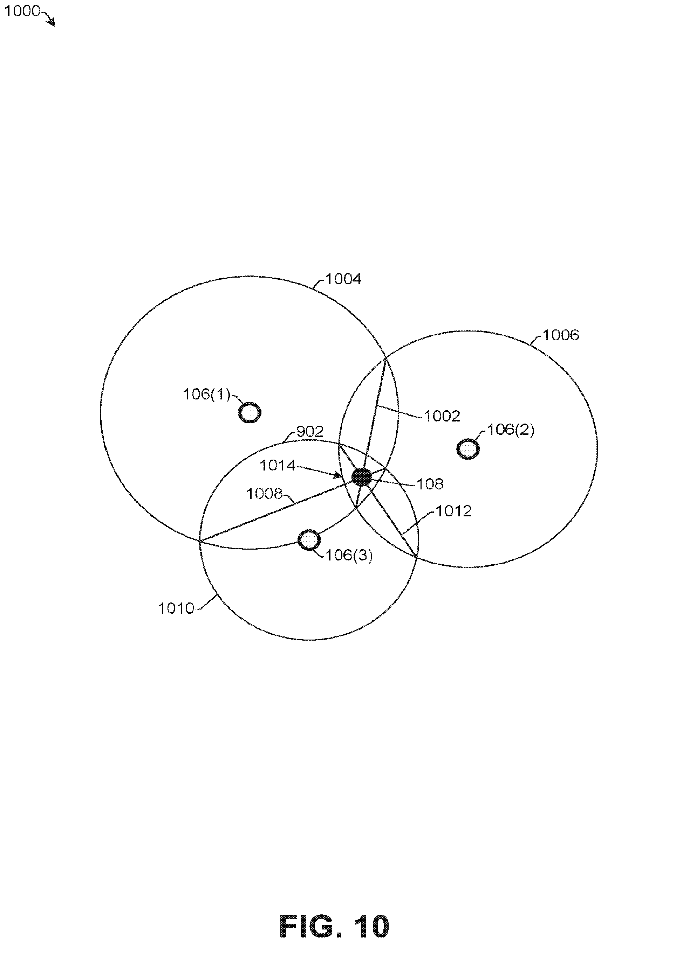

FIG. 10 illustrates an example 1000 of triangulation according to some implementations. The example of FIG. 10 employs a triangulation setup in a 2D plane using geometric circle intersections. In this example, a three object triangulation algorithm based on the power center (or radical center) of three circles may be employed for determining the location of the unmanaged sensor 108 with respect to three managed sensors 106(1), 106(2) and 106(3). The power center of three circles is the unique point of equal power with respect to the three circles. The power line (or radical axis) of two circles is the locus of points having the same power with respect to each circle. The power line is perpendicular to the line joining the circle centers and passes through the circle intersections, when they exist. For instance, in FIG. 10, a power line 1002 between a first circle 1004 and a second circle 1006 is at the intersection of these two circles; a power line 1008 between the first circle and a third circle 1010 is at the intersection of these two circles; and a power line 1012 is at the intersection of the third circle and the second circle. The intersection 1014 of the power lines is determined to be the location of the unmanaged sensor 108. For an example of a specific algorithm for calculating a location based on this technique, see, e.g., Pierlot et al., "A New Three Object Triangulation Algorithm Based on the Power Center of Three Circles", Research and Education in Robotics (EUROBOT), volume 161 of Communications in Computer and Information Science, pages 248-262, 2011, which is incorporated herein by reference. Further, while several techniques for determining the location of the sensor based on sensed signal strength are described herein, other variations and other techniques will be apparent to those of skill in the art having the benefit of the disclosure herein. Accordingly, implementations herein are not limited to any particular technique for calculating the relative location of a sensor.

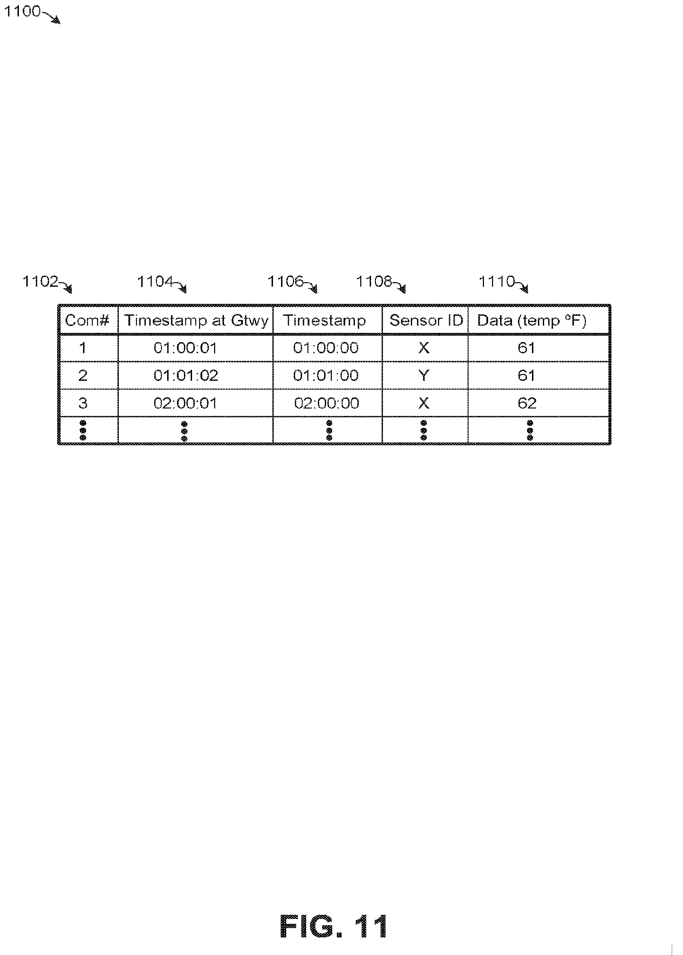

FIG. 11 illustrates an example data structure 1100 of received sensed data information according to some implementations. In this example, the data structure 1100 may be maintained by the gateway computing device 104 and may include the sensed data information that is generated at the unmanaged sensors (e.g., unmanaged sensors having sensor IDs X and Y in FIG. 2) and received by the gateway computing device. The data structure 1100 includes a communication number 1102 assigned for each received transmission and a gateway timestamp 1104 that is associated with the received sensed data when the sensed data is received by the gateway computing device. In addition, the data structure 1100 includes the sensed data information, which includes the sensor timestamp 1106 of when the sensed data was sensed by the reporting sensor, the sensor ID 1108 of the reporting sensor, and the sensed data 1110, which in this example is a measured temperature. To correlate the information in the data structure 1100 with the information in FIG. 2, the sensed data was sent at the time t1x from unmanaged sensor having sensor ID "X", and the timestamp 1106 of "01:00:00" may correspond to t1d, and the data-1 may correspond to the temperature 61 degrees. Further, the gateway timestamp 1104 that is recorded at the gateway computing device "01:00:01" may correspond to t1g in FIG. 2. The information entered for communications 2 and 3 in the data structure 1100 may be similarly corresponded to transmissions 210 and 218, respectively, of FIG. 2.

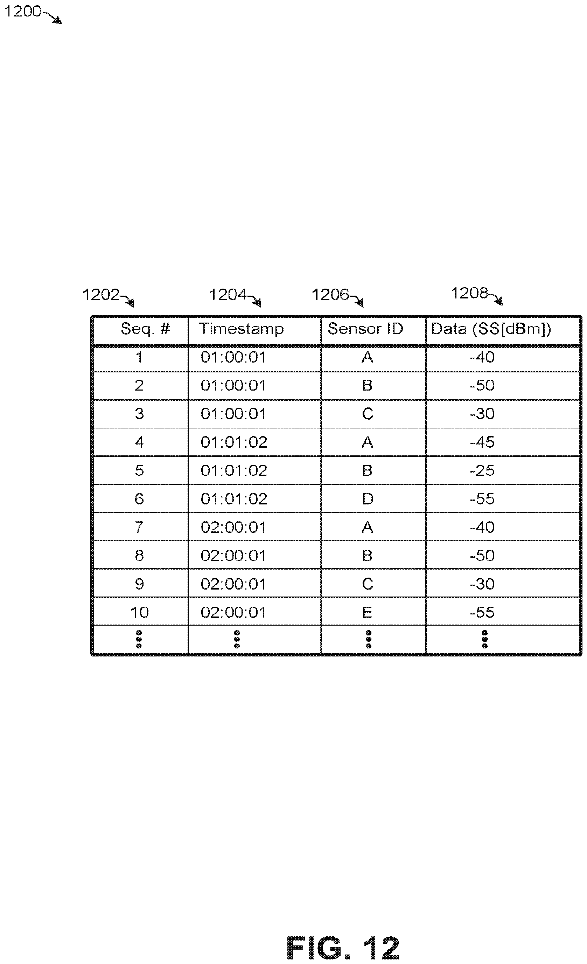

FIG. 12 illustrates an example data structure 1200 of received signal strength information according to some implementations. The data structure 1200 may be maintained by the gateway computing device 104 and populated with signal strength information received from the managed sensors such as discussed above with respect to FIG. 2. The data structure 1200 in this example includes a sequence number 1202 assigned as signal strength information transmissions are received from the managed sensors. Further, the data structure 1200 includes at least one timestamp 1204 associated with the signal strength information by the respective managed sensor, such as when the signal is first received by the managed sensor. In some examples, two time stamps may be included in the data structure 1200 for each received signal strength transmission, such as a beginning timestamp and an ending timestamp, as discussed above with respect to FIG. 6. In addition, the data structure 1200 may include a sensor ID 1206 of the managed sensor that sent the signal strength information. Furthermore, the data structure 1200 may include the signal strength information 1208, which in this example is expressed in decibel milliamps, but which may be expressed in other units or by other terminology in other examples. Further, in the case that the managed sensors also are configured to detect a direction from which the signal was received, the data structure 1200 may include one or more additional columns to provide direction information.

As an example, sequence number 1 may correspond to the transmission 204 received by the gateway computing device in FIG. 2, in which the transmission is received from the managed sensor having sensor ID A, with a timestamp of t1a which is "01:00:01" in this example about the transmission 202 sent by the unmanaged sensor X, with a detected signal strength SS-1a equal to -40 dBm. Sequence number 2 may correspond to the transmission 206 received by the gateway computing device from the second managed sensor having sensor ID B, and sequence number 3 may correspond to yet another transmission from a third managed sensor not shown in FIG. 2.

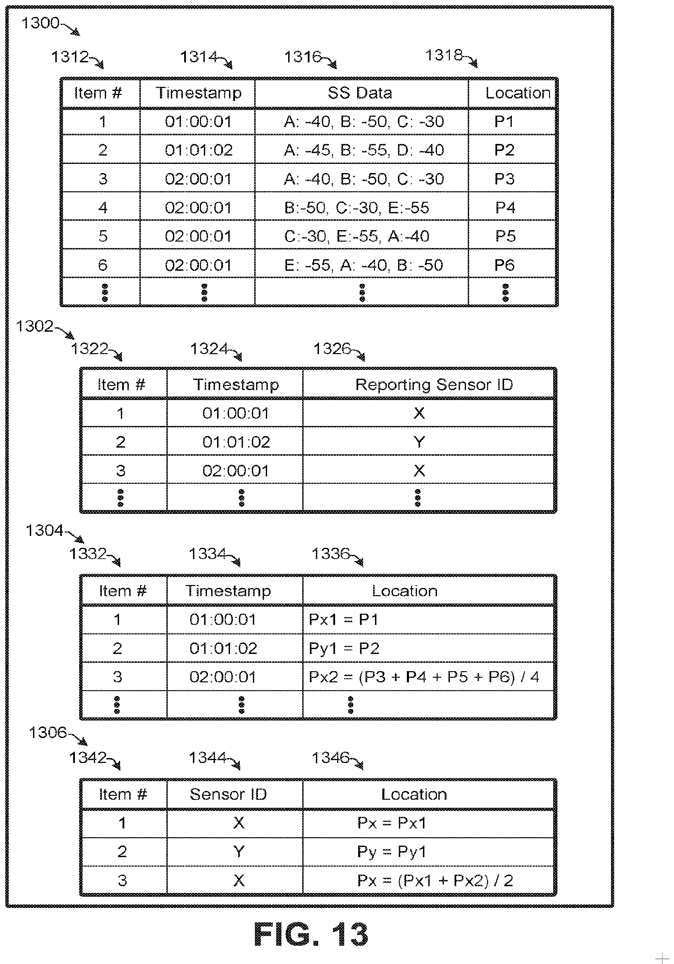

FIG. 13 illustrates example data structures 1300, 1302, 1304, and 1306 for determining sensor locations according to some implementations. The data structures 1300, 1302, 1304, and 1306 may be generated by the gateway computing device when determining the location of the reporting sensor, as discussed above, e.g., with respect to FIG. 7.

In this example, data structure 1300 is generated from the information in the data structure 1200 by comparing the timestamps 1204 for a plurality of received signal strength information transmissions to identify sets of related timestamps that are the same or within a threshold time of each other, as discussed above, e.g., with respect to FIG. 7, block 710. For example, the data structure 1300 includes an item number 1312, a timestamp 1314, signal strength (SS) information 1316, and a calculated location 1318 that is determined from the signal strength data 1316. The SS data 1316 for item 1 may correspond to the signal strength information of the sequence numbers 1-3 in data structure 1200. Accordingly, the data structure 1300 includes three sets of related signal strength data, with item 1 corresponding to a first set, item 2 corresponding to a second set that is contiguous with the first set, and items 3-6 corresponding to a third set.

In this example, suppose that trilateration is being used to determine the location of the reporting sensor, and therefore three SS information are used to calculate the location of the reporting sensor, e.g., as discussed above with respect to FIG. 7, block 712 and FIG. 9. Thus, for item 1, there is only one combination of the three SS information, i.e., A: -40, B: - 50, C: -30, resulting in a calculated location of the reporting sensor as position P1. Similarly, item 2 in data structure 1300 corresponds to sequence numbers 4-6 of the data structure 1200, which also leads to only one combination of three SS information, i.e., A: -45, B: -55, D: -40, resulting in a calculated location of the reporting sensor as position P2. Further, items 3-6 of the data structure 1300 correspond to sequence numbers 7-10 of the data structure 1200. In this case, there are four signal strength readings from four different managed sensors, but only three SS readings are used for determining the position by trilateration. Accordingly, there may be four different combinations of the four SS readings, resulting in four location calculations P3, P4, P5, and P6.

Data structure 1302 includes an item number 1322, a timestamp 1324, and a reporting sensor ID 1326. For example, the gateway computing device may determine the association between the timestamps of the signal strength information and the reporting sensor ID based on comparison of the timestamps as discussed above with respect to block 716 of FIG. 7. Accordingly, in this example, the timestamp of item 1 corresponds to reporting sensor ID "X"; the timestamp of item 2 corresponds to reporting sensor ID "Y"; and the timestamp of item 3 corresponds to the reporting sensor ID "X". Thus, the locations calculated in data structure 1300 may correspond to the respective corresponding sensor IDs.

Data structure 1304 includes an item number 1332, a timestamp 1334, and a location 1336. For example, data structure 1304 may result from execution of block 714 in FIG. 7. In data structure 1304, locations may be determined, such as by averaging, if there is more than one calculated location. Accordingly, for item 1, the location Px1 is equal to P1 calculated in data structure 1300. For item 2, the location Py1 is equal to P2 calculated in data structure 1300. For item 3, the location Px2 is equal to (P3 + P4 + P5 + P6)/4 since there are four locations determined for the third timestamp (items 3-6 in data structure 1300).

Data structure 1306 includes an item number 1342, a timestamp 1344, and a location 1346. The data structure 1306 may be calculated by the gateway computing device based on data structures 1302 and 1304. Further, the data structure 1306 illustrates execution of block 718 and 720 of FIG. 7. In this example, suppose that for item 1, the location of the sensor X, Px, is equal to location Px1 determined above in the data structure 1304. Similarly, the location for sensor Y, Py, is equal to location Py1 determined above in the data structure 1304. Furthermore, for item 3, the location of the sensor X is recalculated based on determination of a new location Px2. For example, if the new location is within a threshold distance of the prior location, then the location of the recalculated location for sensor X is Px=(Px1+Px2)/2, i.e., the average of the previously calculated location(s) and the currently calculated location. As mentioned above, if the currently calculated location Px2 is more than a threshold distance from the previously calculated location Px1, then averaging may not be performed since the previous location may not be relevant to the current location.

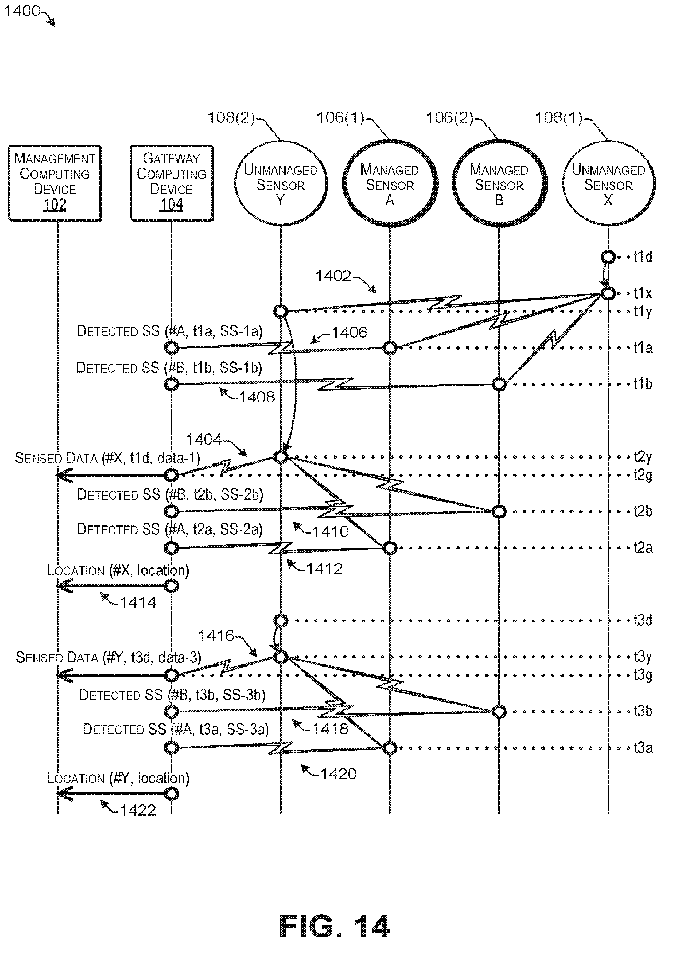

FIG. 14 illustrates an example sequence diagram according to some implementations. This example may correspond to a multi-hop wireless sensor network. Accordingly, a difference from the example of FIG. 2 is that the sensed data may be transmitted from the first unmanaged sensor 108(1) to another sensor in the sensor network, such as the second unmanaged sensor 108(2), which in turn forwards the sensed data to the gateway computing device 104. The detected signal strength information from the managed sensors 106(1) and 106(2) at t1a and t1b, respectively, is not able to be directly associated with the sensed data sent at t1x from first unmanaged sensor X because the time at which the sensed data reaches the gateway computing device 104 is not until t2g. Accordingly, the sensor ID X of the first unmanaged sensor 108(1) is associated with the correct signal strength data by considering the sequence of data transmissions, as discussed below.

In this example, suppose that the unmanaged sensor 108(1) sends a first sensed data transmission 1402 that may include sensed data "data-1", a timestamp "t1d" associated with the collected sensed data, and the sensor ID "X". The second unmanaged sensor 108(2) may receive the sensed data information transmission 1402 at time "t1y" and may forward the transmission to the gateway computing device 104 at time t2y in a second transmission 1404. The gateway computing device 104 may receive the transmission 1404 from the second unmanaged sensor 108(2), and may forward the information included in the transmission 1404 to the management computing device 102. In addition, the gateway computing device 104 may record its own timestamp of the time "t2g" at which the gateway computing device 104 received the forwarding transmission 1404 from the second unmanaged sensor 108(2).

Some of the managed sensors 106 that are located near the first unmanaged sensor 108(1) may also detect the radio signal of the transmission 1402. Thus, in addition to the second unmanaged sensor 108(2) receiving the communication 1402, two or more managed sensors 106 may also receive the transmission 1402 and/or may otherwise detect the signal strength of the transmission 1402. For instance, the first managed sensor 106(1) and the second managed sensor 106(2) may each send signal strength information to the gateway computing device 104, along with respective timestamps of when the signal strength was detected, and respective sensor IDs of the respective managed sensors 106(1) and 106(2). Thus, the first managed sensor 106(1) may send a communication 1406 that includes the sensor ID "A", the timestamp "t1a" of when the first managed sensor 106(1) detected the signal strength of the transmission 1402, and the signal strength information "SS-1a". Similarly, the second managed sensor 106(2) may send a communication 1408 that includes the sensor ID "B", the timestamp "t1b" of when the second managed sensor 106(2) detected the signal strength of the transmission 1402, and the signal strength information "SS-1b". In some cases, the respective timestamps t1a and t2a measured on the managed sensors 106(1) and 106(2), respectively, may include single timestamps of when the signal strength is detected. Alternatively, in some cases, the respective timestamps t1a and t2a measured on managed sensors 106(1) and 106(2), respectively, may include timestamps of the beginning and the ending of the signal detection, as discussed, e.g., with respect to FIG. 6. The gateway computing device 104 may store the received signal strength information received via the transmissions 1406 and 1408.

In addition, when the second unmanaged sensor 108(2) transmits the forwarding message 1404 to the gateway computing device 104, one or more of the managed sensors 106(1) and 106(2) may also receive the transmission 1404 and/or may otherwise detect the signal strength of the transmission 1404. For instance, the first managed sensor 106(1) may detect the signal strength of the transmission 1410 at a time "t2a". Further, the second managed sensor 106(2) may detect the signal strength of the transmission 1410 at a time "t2b". In this example, the first managed sensor 106(1) and the second managed sensor 106(2) may each send signal strength information to the gateway computing device 104, along with respective timestamps of when the signal strength was detected, and respective sensor IDs of the respective managed sensors 106(1) and 106(2). Thus, the second managed sensor 106(2) may send a communication 1410 that includes the sensor ID "B", the timestamp "t2b" of when the second managed sensor 106(2) detected the signal strength of the transmission 1410, and the signal strength information "SS-2b". Similarly, the first managed sensor 106(1) may send a communication 1412 that includes the sensor ID "A", the timestamp "t2a" of when the first managed sensor 106(1) detected the signal strength of the transmission 1410, and the signal strength information "SS-2a".

The gateway computing device 104 may receive the communications 1410 and 1412 from the managed sensors 106(1) and 106(2), respectively, and may store the received signal strength information from transmissions 1410 and 1412. As discussed below, the gateway computing device 104 is able to associate the received sensed data, data-1, and the sensor ID X with the detected signal strength(s) (detected SS) SS-1a and SS-1b, rather than SS-2a and SS-2b based at least in part on comparing the timestamp t2g recorded at the gateway computing device 104 with the timestamps t2a, t2b, t1a, and t1b, to determine that these timestamps are considered a continuous sequence of data transmission. For example, if t2g, t2a, and t2b are approximately the same time (e.g., within a threshold time of each other), but t1a and t1b have at least one managed sensor in common with t2a and t2b, respectively, or were otherwise in a time between t1d and t2g, then the detected SS information SS-1a and SS-1b received from the managed sensors 106(1) and 106(2), respectively, may be associated with the sensed data data-1 and the sensor ID X, rather than the detected SS information SS-2a and SS-2b.

As discussed additionally below, the gateway computing device 104 may determine the location of the first unmanaged sensor 108(1) based at least partially on the received detected signal strength information SS-1a and SS-1b. The gateway computing device 104 may send the location information to the management computing device 102 in a transmission 1414 for use in determining an analysis result based at least in part on the sensed data. Alternatively, the gateway computing device 104 may forward the detected SS information from communications 1406 and 1408 to the management computing device 102, and the management computing device 102 may perform the processing to determine the location of the first unmanaged sensor 108(1).

Subsequently, at time t3d, suppose that the second unmanaged sensor 108(2) measures or otherwise receives sensed data "data-3". The second unmanaged sensor 108(2) may send the sensed data to the gateway computing device 104 in a transmission 1416 at time t3y, including the timestamp t3d and the sensor ID Y. The gateway computing device 104 may receive the transmission at a time t3g, and may forward the sensed data data-3, the sensor ID Y, and the timestamp t3d to the management computing device 102.

In addition to the gateway computing device 104 receiving the transmission 1416, the managed sensors 106(1) and 106(2) may also receive the transmission 1416 and/or may otherwise detect the signal strength of the transmission 1416. For instance, the first managed sensor 106(1) may detect the signal strength of the transmission 1416 at a time "t3a". Further, the second managed sensor 106(2) may detect the signal strength of the transmission 1416 at a time "t3b". In this example, the first managed sensor 106(1) and the second managed sensor 106(2) may each send signal strength information to the gateway computing device 104, along with respective timestamps of when the signal strength was detected, and respective sensor IDs of the respective managed sensors 106(1) and 106(2). Thus, the second managed sensor 106(2) may send a communication 1418 that includes the sensor ID "B", the timestamp "t3b" of when the second managed sensor 106(2) detected the signal strength of the transmission 1416, and the signal strength information "SS-3b". Similarly, the first managed sensor 106(1) may send a communication 1420 that includes the sensor ID "A", the timestamp "t3a" of when the first managed sensor 106(1) detected the signal strength of the transmission 1418, and the signal strength information "SS-3a".

The gateway computing device 104 may receive the communications 1420 and 1418 from the managed sensors 106(1) and 106(2), respectively, and may associate the received sensed data, data-3, with the detected signal strength(s) (detected SS) SS-3a and SS-3b based at least in part on comparing the timestamp t3g recorded at the gateway computing device 104 with the timestamps t3a and t3b recorded at the management sensors 106(1) and 106(2), respectively. For example, if t3g, t3a, and t3b are approximately the same time (e.g., within a threshold time of each other), then the detected SS information SS-3a and SS-3b received from the managed sensors 106(1) and 106(2), respectively, may be associated with the sensed data data-3 received by the gateway computing device 104 from the unmanaged sensor 108(1) based on a high likelihood that they correspond to the same radio signal. Accordingly, the gateway computing device 104 may determine the location of the second sensor 108(2) in a manner similar to that discussed above with respect to FIG. 2, and may forward the location information (Y, location) to the management computing device in a communication 1422. Alternatively, the gateway computing device 104 may forward the detected SS information from communications 1418 and 1420 to the management computing device 102, and the management computing device 102 may perform the processing to determine the location of the second unmanaged sensor 108(2).

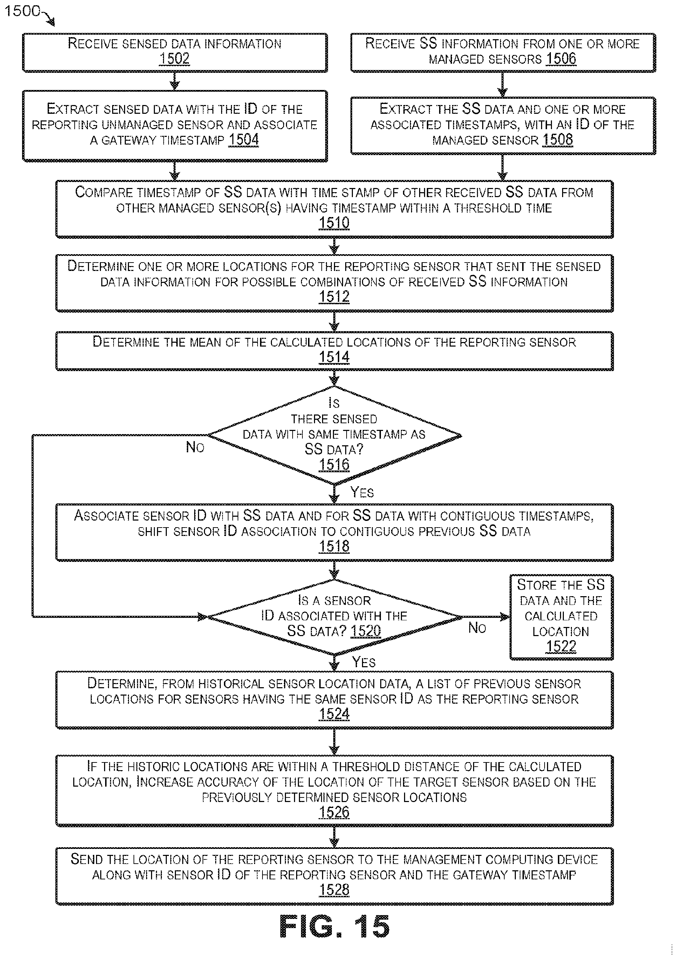

FIG. 15 is a flow diagram illustrating an example process 1500 for determining sensor location according to some implementations. This example enables determination of sensor locations by the gateway computing device 104 for the multi-hop case discussed above with reference to FIG. 14. A difference from the process 700 of FIG. 7, i.e., the single hop case, is that block 716 is replaced with blocks 1516-1520. For example, in the multi-hop case, the gateway timestamp associated with the sensor ID of the reporting unmanaged sensor does not necessarily match with timestamps of the managed sensor transmissions sent by the managed sensors to indicate the signal strength of the transmission of the sensed data, e.g., as discussed above with respect to the timestamps t1a, t1b, t2g, t2a, and t2b in FIG. 14. Accordingly, in this case, the sensor ID X included in the sensed data received at t2g is associated with contiguous previous signal strength data corresponding to t1a and t1b based on having received earlier detected SS transmissions from at least one of the same managed sensors and/or where the earlier detected SS transmissions are later than t1d (included in the sensed data) and earlier than t2g, t2a, and t2b.

At 1502, the computing device may receive sensed data information sent by a reporting unmanaged sensor. For example, the sensed data information may include the sensed the data, a sensor ID of the reporting sensor that sent the sensed data and a timestamp corresponding to when the data was sensed by the reporting sensor. Further, in some examples, such as in the case that a managed sensor is movable, the process 1500 may also be applied to a managed sensor as the reporting sensor.

At 1504, the computing device may extract the sensed data with the sensor ID of the reporting sensor, the timestamp at which the data was sensed, and may further associate a gateway timestamp with the sensed data.

At 1506, the computing device may receive signal strength information from two or more managed sensors. For example, if the gateway computing device is also able to determine signal strength information, then receiving signal strength information from at least one or two managed sensors may be sufficient. On the other hand, if the gateway computing device is not able to determine signal strength information, then signal strength information may be received from at least two or more managed sensors.

At 1508, the computing device may extract, from the signal strength information, the signal strength data, one or more associated timestamps, and an ID of the managed sensor that sent the signal strength information.

At 1510, the computing device may compare a timestamp of the SS data with the time stamps of other received SS data from other managed sensors to locate SS data having timestamps within a threshold time of each other. Accordingly, the SS data having timestamps within a threshold time may be assumed to correspond to the same sensed data transmission and therefore are assumed to be indicative of the location of the reporting sensor.

At 1512, the computing device may determine one or more locations for the reporting sensor that sent the sensed data information based on possible combinations of the received SS information. For example, if signal strength information is received from three or more managed sensors, then techniques such as triangulation, trilateration, or the like, may be used to determine, from multiple different combinations of the signal strength information, a plurality of indicated locations of the reporting sensor.

At 1514, the computing device may determine the mean of the calculated locations of the reporting sensor. For example, when multiple different locations are determined from the multiple different combinations of signal strength information, the computing device may determine the mean (average) of the multiple locations as the determined location of the reporting sensor.

At 1516, the computing device may determine whether there is sensed data that has a gateway timestamp that is the same or within a threshold time of the timestamp of received signal strength information. If so, the process goes to block 1518; if not, the process goes to block 1520.

At 1518, the computing device may associate the sensor ID with the signal strength data and for signal strength data with contiguous earlier time stamps, may shift the sensor ID to association with the signal strength data of the contiguous earlier timestamps. For example, if there is a later set of time stamps that include the gateway timestamp for the sensed data and are the same or within a first threshold time of each other, and if there is another earlier set of time stamps that are the same or within the first threshold time of each other and that are for a different location and within a second threshold time of the later set of time stamps, then signal strength information from the earlier set of time stamps may be associated with the sensor ID, rather than the signal strength information from the later set of timestamps. For example, the second threshold time may be less that the time from the timestamp associated with the sensed data to the gateway timestamp.

At 1520, the computing device may determine whether signal strength data of a set of timestamp has a sensor ID associated. If so, the process goes to block 1524; if not, the process goes to block 1522.

At 1522, the computing device may store the signal strength data and the calculated location. For example, even though the sensor ID is not directly know, the signal strength data and the calculated location may be stored an may be used subsequently to improve the accuracy of the location of the corresponding unmanaged sensor based on the calculated location being within a threshold distance of a calculated location associated with a sensor ID. Thus, the stored calculated location may be used in a manner similar to other historic locations, as discussed below with respect to 1524 and 1526.

At 1524, the computing device may determine, from historical sensor location data, a list of previous sensor locations for sensors having the same sensor ID as the reporting sensor.

At 1526, if the historic locations are within a threshold distance of the calculated location, the computing device may increase accuracy of the calculated location of the reporting sensor based on the previously determined sensor locations. For example, if the historic locations for the reporting sensor are within the threshold distance of the calculated location (e.g., within a threshold tolerance based on the actual distances between sensors in the network), then the reporting sensor may be assumed to have not been moved from the previously determined location. Accordingly, the current calculated location may be averaged with the previously determined locations to determine a new current location of the reporting sensor. On the other hand, if the historic locations are not within the threshold distance of the current calculated location, then the reporting sensor may be assumed to have been moved from the previous location and the historic locations of the reporting sensor might not be used to improve the accuracy of the current calculated location. Furthermore, in some examples, the detected SS information SS-2a and SS-2b determined for the second unmanaged sensor 108(2) may be used to improve the accuracy of the location of the second unmanaged sensor 108(2), despite not being directly associated with the sensor ID Y. For example, the detected SS information SS-2a and SS-2b may be used to calculate the location of an unknown sensor. Subsequently, based on determining that the location is within a threshold distance of the calculated location of the second unmanaged sensor, the additional location calculation may be used as another historic location calculation, and averaged with other location calculations for the second unmanaged sensor 108(2).

At 1528, the computing device may send the location of the reporting sensor to the management computing device along with the sensor ID of the reporting sensor and the gateway timestamp. For example, the gateway timestamp may indicate the time at which the location of the reporting sensor was determined.

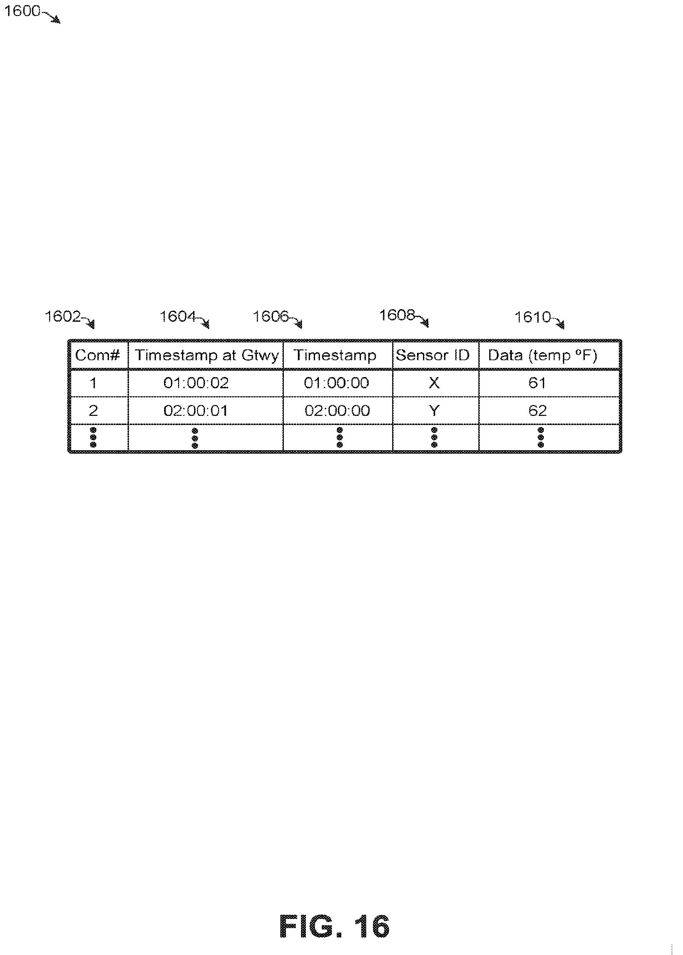

FIG. 16 illustrates an example data structure 1600 according to some implementations. In this example, the data structure 1600 may be maintained by the gateway computing device 104 and may include the sensed data information that is generated at the unmanaged sensors (e.g., reported by the unmanaged sensors having sensor IDs X and Y in FIG. 14) and received by the gateway computing device. The data structure 1600 includes a communication number 1602 assigned for each received sensed data transmission and a gateway timestamp 1604 that is associated with the received sensed data when the sensed data is received by the gateway computing device. In addition, the data structure 1600 includes the sensed data information, which includes the timestamp 1606 of when the sensed data was sensed by the reporting sensor, the sensor ID 1608 of the reporting sensor, and the sensed data 1610, which in this example is a measured temperature. To correlate the information in the data structure 1600 with the information in FIG. 14, the sensed data was sent at the time t1x from unmanaged sensor having sensor ID "X", and the timestamp 1606 of "01:00:00" may correspond to t1d, and the data-1 may correspond to the temperature 61 degrees. Further, the gateway timestamp 1604 that is recorded at the gateway computing device "01:00:02" may correspond to t2g in FIG. 14. The information entered for communication 2 in the data structure 1600 may be similarly corresponded to transmission 1416 of FIG. 14.

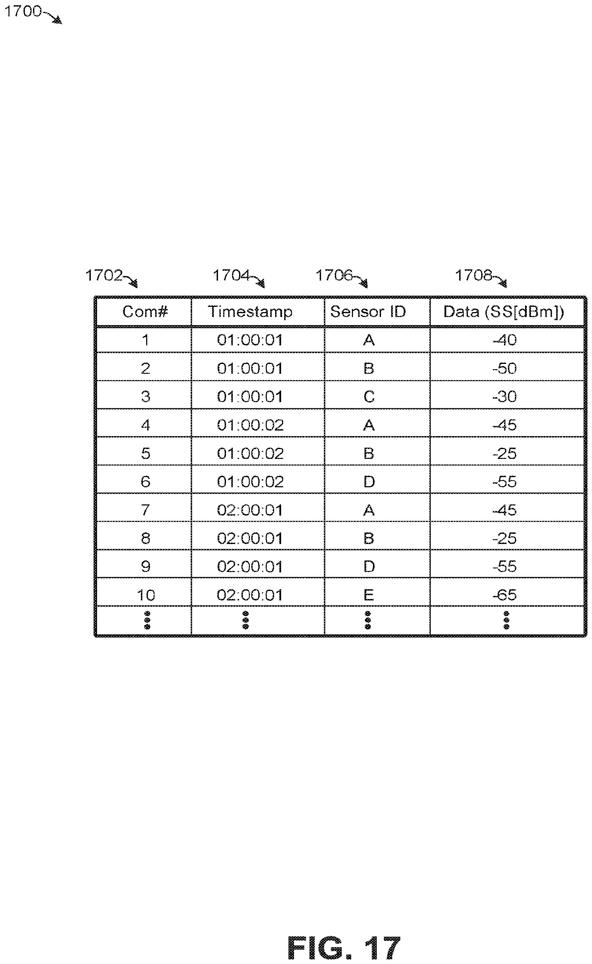

FIG. 17 illustrates an example data structure 1700 according to some implementations. The data structure 1700 may be maintained by the gateway computing device 104 and populated with signal strength information received from the managed sensors such as discussed above with respect to FIG. 14. The data structure 1700 in this example includes a sequence number 1702 assigned as signal strength information transmissions are received from the managed sensors. Further, the data structure 1700 includes at least one timestamp 1704 associated with the signal strength information by the respective managed sensor, such as when the signal is first received by the managed sensor. In some examples, two time stamps may be included in the data structure 1700 for each received signal strength transmission, such as a beginning timestamp and an ending timestamp, as discussed above with respect to FIG. 6. In addition, the data structure 1700 may include a sensor ID 1706 of the managed sensor that sent the signal strength information. Furthermore, the data structure 1700 may include the signal strength information 1708, which in this example is expressed in decibel milliamps, but which may be expressed in other units or by other terminology in other examples. Further, in the case that the managed sensors also are configured to detect a direction from which the signal was received, the data structure 1700 may include one or more additional columns to provide direction information.

As an example, sequence number 1 may correspond to the transmission 1406 received by the gateway computing device in FIG. 14, in which the transmission is received from the managed sensor having sensor ID A, with a timestamp of t1a which is "01:00:01" in this example and related to the transmission 1402 sent by the unmanaged sensor X, with a detected signal strength SS-1a equal to -40 dBm. Sequence number 2 may correspond to the transmission 1408 received by the gateway computing device from the second managed sensor having sensor ID B. Sequence number 3 may correspond to yet another transmission from a third managed sensor not shown in FIG. 2. Further, sequence number 4 may correspond to the transmission 1412 which is received from the unmanaged sensor A at time t2a in response to the transmission 1404 sent by the second unmanaged sensor when forwarding the transmission 1402 received from the first managed sensor. The other information in the data structure 1700 may be similarly corresponded to the example of FIG. 14.

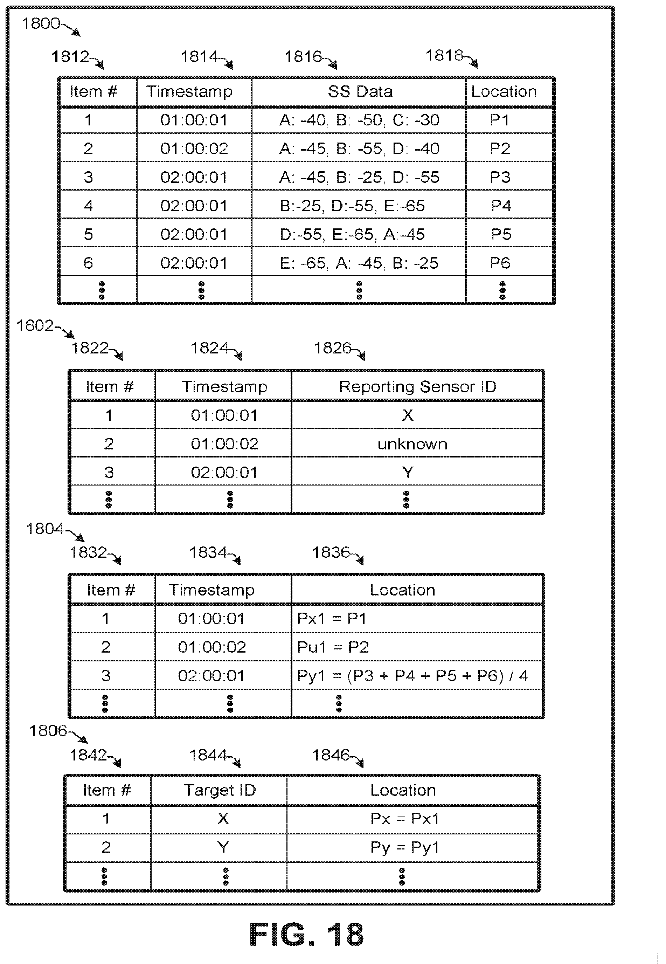

FIG. 18 illustrates example data structures 1800, 1802, 1804, and 1806 for determining a sensor location according to some implementations. The data structures 1800, 1802, 1804, and 1806 may be generated by the gateway computing device when determining the location of the reporting sensor, as discussed above, e.g., with respect to FIG. 15.

In this example, data structure 1800 is generated from the information in the data structure 1700 by comparing the timestamps 1704 for a plurality of received signal strength information transmissions to identify timestamps that are the same or within a threshold time of each other, as discussed above, e.g., with respect to FIG. 115, block 1510. For example, the data structure 1800 includes an item number 1812, a timestamp 1814, signal strength (SS) information 1816, and a calculated location 1818 that is determined from the signal strength information 1816. The SS information 1816 for item 1 in may correspond to the signal strength information of the sequence numbers 1-3 in data structure 1700.

In this example, suppose that trilateration is being used to determine the location of the reporting sensor, and therefore three SS information are used to calculate the location of the reporting sensor, e.g., as discussed above with respect to FIG. 15, block 1512 and FIG. 9. Thus, for item 1, there is only one combination of the three SS information, i.e., A: -40, B: -50, C: -30, resulting in a calculated location of the reporting sensor as position P1. Similarly, item 2 in data structure 1800 corresponds to sequence numbers 4-6 of the data structure 1700, which also leads to only one combination of three SS information, i.e., A: -45, B: -55, D: -40, resulting in a calculated location of the reporting sensor as position P2. Further, items 3-6 of the data structure 1800 correspond to sequence numbers 7-10 of the data structure 1700. In this case, there are four signal strength readings from four different managed sensors, but only three SS readings are used for determining the position by trilateration. Accordingly, there may be four different combinations of the four SS readings, resulting in four location calculations P3, P4, P5, and P6.

Data structure 1802 includes an item number 1822, a timestamp 1824, and a reporting sensor ID 1826. For example, the gateway computing device may determine the association between the timestamps of the signal strength information and the reporting sensor ID based on comparison of the timestamps as discussed above with respect to blocks 1516-1520 of FIG. 15. By comparing the timestamp of items 1 and 2 in data structure 1800, the gateway computing device may determine that these items are considered to be a continuous sequence of data transmission. Accordingly, the reporting sensor ID X that would be associated with item 2 in data structure 1802, is shifted to item 1, and the sensor ID for item 2 is marked as unknown. In other words, based on the timestamps of item 1 being earlier than the timestamps of item 2, and not within the threshold time of each other and/or having one or more managed sensors in common, the gateway computing device is able to determine that the sensed data transmission from the first managed sensor X corresponds to the signal strength information of item 1 and not item 2. Accordingly, in this example, the timestamp of item 1 corresponds to reporting sensor ID "X"; the timestamp of item 2 corresponds to an unknown sensor ID; and the timestamp of item 3 corresponds to the reporting sensor ID "Y". Thus, the locations calculated in data structure 1800 may correspond to the respective corresponding sensor IDs.

Data structure 1804 includes an item number 1832, a timestamp 1834, and a location 1836. For example, data structure 1802 may result from execution of block 1514 in FIG. 15. In data structure 1804, locations may be determined if there is more than one calculated location. Accordingly, for item 1, the location Px1 is equal to P1 calculated in data structure 1800. For item 2, the location Pu1 of the unknown sensor is equal to P2 calculated in data structure 1800. For item 3, the location Py1 is equal to (P3 + P4 + P5 + P6)/4 since there are four locations determined for four different combinations of sensor strength information corresponding to the third timestamp in data structure 1800.

Data structure 1806 includes an item number 1842, a timestamp 1844, and a location 1446. The data structure 1806 may be calculated by the gateway computing device based on data structures 1802 and 1804. Further, determining the data structure 1806 may include execution of blocks 1524 and 1526 of FIG. 15 if there are previously calculated locations for sensor X or Y. In this example, suppose that for item 1, the location of the sensor X, Px, is equal to location Px1 determined above in the data structure 1804. Similarly, the location for sensor Y, Py, is equal to location Py1 determined above in the data structure 1804.

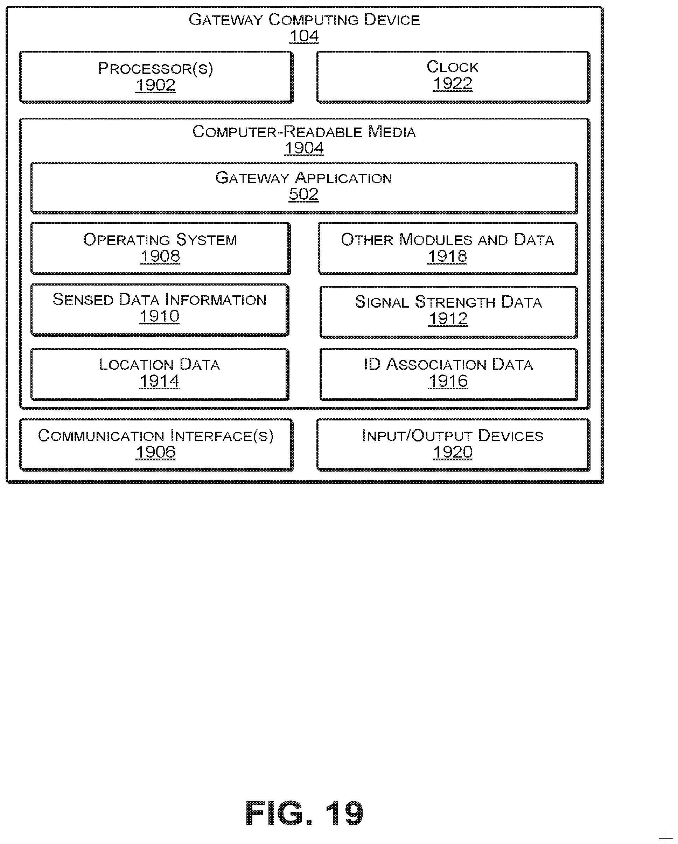

FIG. 19 illustrates an example gateway computing device 104 according to some implementations. In some examples, the gateway computing device 104 may include one or more servers, personal computers, network computers, or other types of computing devices that may be embodied in any number of ways. In the illustrated example, the gateway computing device 104 includes, or may have associated therewith, one or more processors 1902, one or more computer-readable media 1904, and one or more communication interfaces 1906.

Each processor 1902 may be a single processing unit or a number of processing units, and may include single or multiple computing units, or multiple processing cores. The processor(s) 1902 can be implemented as one or more central processing units, microprocessors, microcomputers, microcontrollers, digital signal processors, state machines, logic circuits, and/or any devices that manipulate signals based on operational instructions. For instance, the processor(s) 1902 may be one or more hardware processors and/or logic circuits of any suitable type specifically programmed or configured to execute the algorithms and processes described herein. The processor(s) 1902 can be configured to fetch and execute computer-readable instructions stored in the computer-readable media 1904, which can program the processor(s) 1902 to perform the functions described herein.

The computer-readable media 1904 may include volatile and nonvolatile memory and/or removable and non-removable media implemented in any type of technology for storage of information such as computer-readable instructions, data structures, program modules, or other data. For example, the computer-readable media 1904 may include, but is not limited to, RAM, ROM, EEPROM, flash memory or other memory technology, optical storage, solid state storage, magnetic tape, magnetic disk storage, RAID storage systems, storage arrays, network attached storage, storage area networks, cloud storage, or any other medium that can be used to store the desired information and that may be accessed by a computing device. Depending on the configuration of the gateway computing device 104, the computer-readable media 1904 may be a tangible non-transitory medium to the extent that, when mentioned, non-transitory computer-readable media exclude media such as energy, carrier signals, electromagnetic waves, and/or signals per se. In some cases, the computer-readable media 1904 may be at the same location as the gateway computing device 104, while in other examples, the computer-readable media 1904 may be partially remote from the gateway computing device 104.

The computer-readable media 1904 may be used to store any number of functional components that are executable by the processor(s) 1902. In many implementations, these functional components comprise instructions or programs that are executable by the processor(s) 1902 and that, when executed, specifically program the processor(s) 1902 to perform the actions attributed herein to the gateway computing device 104. Functional components stored in the computer-readable media 1904 may include the gateway application 502 described above with reference to FIG. 5. The gateway application 502 may include one or more computer programs, computer-readable instructions, executable code, or portions thereof that are executable to cause the processor(s) 1902 to perform various tasks, such as for receiving and processing data sent by the managed sensors and unmanaged sensors. Additionally, an operating system 1908 may control and manage various functions of the gateway computing device 104. In some cases, the functional components may be stored in a storage portion of the computer-readable media 1904, loaded into a local memory portion of the computer-readable media 1904, and executed by the one or more processors 1902. Numerous other software and/or hardware configurations will be apparent to those of skill in the art having the benefit of the disclosure herein.

In addition, the computer-readable media 1904 may store data and data structures used for performing the functions and services described herein. For example, the computer-readable media 1904 may store sensed data information 1910 received from the managed and unmanaged sensor, signal strength data 1912 received from the managed sensors, location data 1914 indicating the physical locations of managed and unmanaged sensors, and ID association data 1916 indicating sensor IDs associated with certain timestamps. The gateway computing device 104 may also include or maintain other functional components and data, such as other modules and data 1918, which may include programs, drivers, etc., and other data used or generated by the functional components. Further, the gateway computing device 104 may include many other logical, programmatic, and physical components, of which those described above are merely examples that are related to the discussion herein.

The communication interface(s) 1906 may include one or more interfaces and hardware components for enabling communication with various other devices, such as over the one or more networks 110, and/or with the managed and unmanaged sensors. Thus, the communication interfaces 1906 may include, or may couple to, one or more ports that provide connection to the network(s) 110 for communicating with the management computing device 102, as well as for communicating wirelessly with the managed and unmanaged sensors. For example, the communication interface(s) 1906 may enable communication through one or more of a LAN (local area network), WAN (wide area network), the Internet, cable networks, cellular networks, wireless networks (e.g., Wi-Fi) and wired networks (e.g., fiber optic, Ethernet, Fibre Channel,), direct connections, as well as close-range communications such as BLUETOOTH®, and the like, as additionally enumerated elsewhere herein.

In addition, the gateway computing device 104 may include one or more input/output (I/O) devices 1920. Such I/O devices 1920 may include a display, speakers, a microphone, and various user controls (e.g., buttons, a joystick, a mouse, a keyboard, a keypad, a touch screen, etc.), and so forth. Furthermore, the gateway computing device may include a clock 1922 for enabling timestamps to be determined. In some cases, the clock 1922 may be incorporated into the processor(s) 1902, while in other cases, the clock 1922 may be separate therefrom. The clock 1922 may regularly synchronized with other clocks in the sensor network to ensure accuracy of timestamps herein. for Additionally, the gateway computing device 104 may include various other components that are not shown, examples of which may include removable storage, a power source, antenna, and so forth.

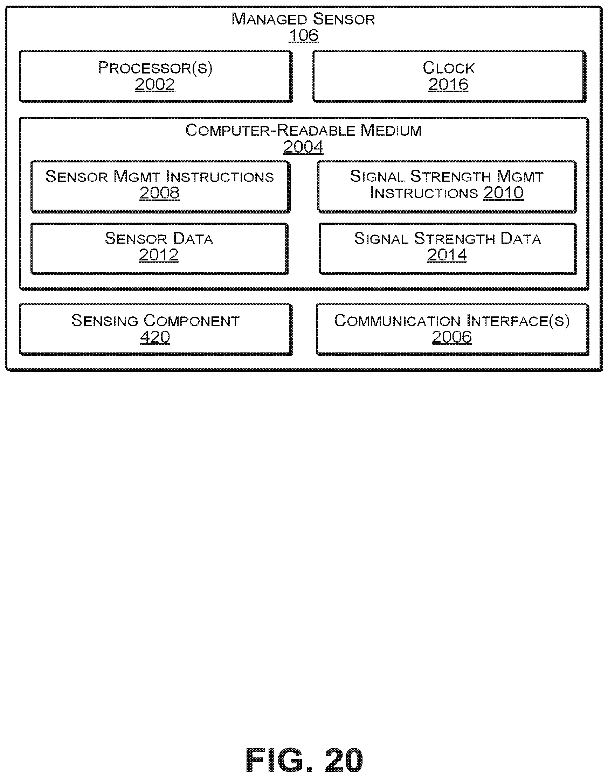

FIG. 20 illustrates an example managed sensor 106 according to some implementations. The managed sensor 106 may include at least limited computing, storage and transceiver capabilities to enable the managed sensor to receive and send data over a network. In some cases, the managed sensor 106 may detect transmissions of other sensors and may send signal strength information to the gateway computing device related to the transmissions of the other sensors. The managed sensor 106 and the other sensors herein may reside in any of a variety of environments for detecting any of a variety of data, as discussed elsewhere herein.

The managed sensor 106 may include at least one processor 2002, a computer-readable medium 2004, and one or more communication interfaces 2006. Each processor 2002 may be a single processing unit or a number of processing units, and may include single or multiple computing units, or multiple processing cores. The processor(s) 2002 can be implemented as one or more central processing units, microprocessors, microcomputers, microcontrollers, digital signal processors, state machines, logic circuitries, and/or any devices that manipulate signals based on operational instructions. For instance, the processor(s) 2002 may be one or more hardware processors and/or logic circuits of any suitable type specifically programmed or configured to execute the algorithms and processes described herein. The processor(s) 2002 may be configured to fetch and execute computer-readable instructions stored in the computer-readable medium 2004, which can program the processor(s) 2002 to perform the functions described herein.

The computer-readable medium 2004 may include volatile and nonvolatile memory and/or removable and non-removable media implemented in any type of technology for storage of information such as computer-readable instructions, data structures, program modules, or other data. For example, the computer-readable medium 2004 may include, but is not limited to, RAM, ROM, EEPROM, flash memory or other memory technology, or any other medium that can be used to store the desired information and that can be accessed by a computing device. Depending on the configuration of the managed sensor 106, the computer-readable medium 2004 may be a tangible non-transitory medium to the extent that, when mentioned, non-transitory computer-readable medium exclude media such as energy, carrier signals, electromagnetic waves, and/or signals per se.

The computer-readable medium 2004 may be used to store any number of functional components that are executable by the processor(s) 2002. In many implementations, these functional components comprise instructions or programs that are executable by the processor(s) 2002 and that, when executed, specifically program the processor(s) 2002 to perform the actions attributed herein to the managed sensor 106. Functional components stored in the computer-readable medium 2004 may include sensor management instructions 2008, which may include the sensing block 404 discussed above with respect to FIG. 4, and signal strength management instructions 2010, which may include the monitoring block 402 discussed above with respect to FIG. 4. The sensor management instructions 2008 and signal strength management instructions 2010 may include one or more computer programs, computer-readable instructions, executable code, executable modules, or portions thereof that are executable to cause the processor(s) 2002 to perform various tasks, such as for obtaining or otherwise receiving sensed data, detecting signal strengths, and sending transmissions to the gateway computing device 104. Numerous other software and/or hardware configurations will be apparent to those of skill in the art having the benefit of the disclosure herein.

In addition, the computer-readable medium 2004 may store, at least temporarily, data and data structures used for performing the functions and services described herein. For example, the computer-readable medium 2004 may include sensor data 2012 and signal strength data 2014. The managed sensor 106 may also include or maintain other functional components, data, and data structures, which may include programs, drivers, etc., and other data used or generated by the functional components.

The communication interface(s) 2006 may include one or more interfaces and hardware components for enabling communication with various other devices, such as through wireless communications. Thus, the communication interfaces 2006 may enable communication through one or more wireless networks (e.g., Wi-Fi, cellular, BLUETOOTH®) and, in some examples, wired networks (e.g., fiber optic, Ethernet, Fibre Channel,) or direct connections or combinations thereof.

In addition, the managed sensor 106 may include the sensing component 420 that may provide sensed data to the processor to be sent to the gateway computing device. Furthermore, the managed sensor 106 may include a clock 2016 for enabling timestamps to be determined. In some cases, the clock 2016 may be incorporated into the processor(s) 2002, while in other cases, the clock 2016 may be separate therefrom. The clock 2016 may be regularly synchronized with the gateway computing device clock to ensure accuracy of the timestamps herein. Further, in some examples herein the unmanaged sensors 108 may have a similar configuration, but might not include, or might not execute, the signal strength management instructions 2010.

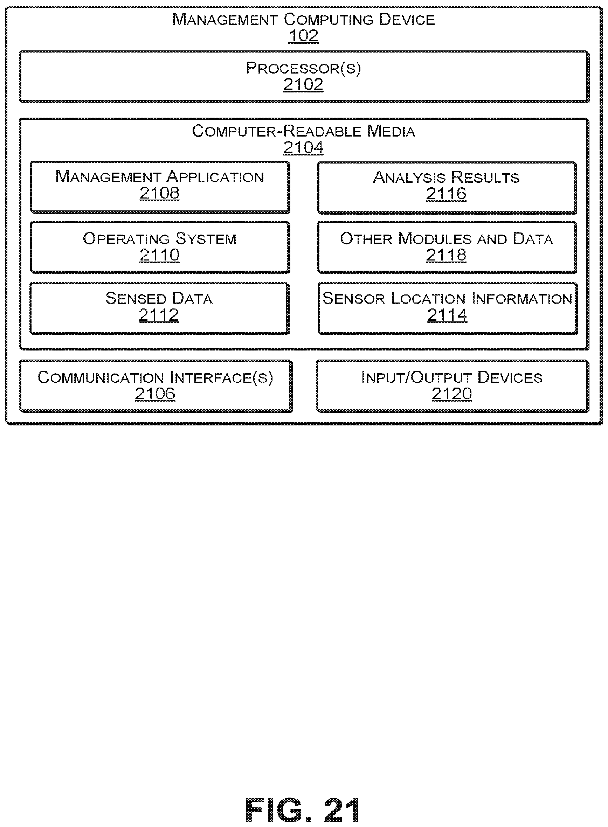

FIG. 21 illustrates an example management computing device 102 according to some implementations. In some examples, the management computing device 102 may include one or more servers, personal computers, or other types of computing devices that may be embodied in any number of ways. For instance, in the case of a server, the modules, other functional components, and at least a portion of data storage may be implemented on at least one server, such as in a cluster of servers, a server farm or data center, a cloud-hosted computing service, and so forth, although other computer architectures may additionally or alternatively be used. In the illustrated example, the management computing device 102 includes, or may have associated therewith, one or more processors 2102, one or more communication interfaces 2106, and one or more computer-readable media 2104.

Each processor 2102 may be a single processing unit or a number of processing units, and may include single or multiple computing units, or multiple processing cores. The processor(s) 2102 can be implemented as one or more central processing units, microprocessors, microcomputers, microcontrollers, digital signal processors, state machines, logic circuitries, and/or any devices that manipulate signals based on operational instructions. For instance, the processor(s) 2102 may be one or more hardware processors and/or logic circuits of any suitable type specifically programmed or configured to execute the algorithms and processes described herein. The processor(s) 2102 can be configured to fetch and execute computer-readable instructions stored in the computer-readable media 2104, which can program the processor(s) 2102 to perform the functions described herein.

The computer-readable media 2104 may include volatile and nonvolatile memory and/or removable and non-removable media implemented in any type of technology for storage of information such as computer-readable instructions, data structures, program modules, or other data. For example, the computer-readable media 2104 may include, but is not limited to, RAM, ROM, EEPROM, flash memory or other memory technology, optical storage, solid state storage, magnetic tape, magnetic disk storage, RAID storage systems, storage arrays, network attached storage, storage area networks, cloud storage, or any other medium that can be used to store the desired information and that may be accessed by a computing device. Depending on the configuration of the management computing device 102, the computer-readable media 2104 may be a tangible non-transitory medium to the extent that, when mentioned, non-transitory computer-readable media exclude media such as energy, carrier signals, electromagnetic waves, and/or signals per se. In some cases, the computer-readable media 2104 may be at the same location as the management computing device 102, while in other examples, the computer-readable media 2104 may be partially remote from the management computing device 102.

The computer-readable media 2104 may be used to store any number of functional components that are executable by the processor(s) 2102. In many implementations, these functional components comprise instructions or programs that are executable by the processor(s) 2102 and that, when executed, specifically program the processor(s) 2102 to perform the actions attributed herein to the management computing device 102. Functional components stored in the computer-readable media 2104 may include a management application 2108. The management application 2108 may include one or more computer programs, computer-readable instructions, executable code, or portions thereof that are executable to cause the processor(s) 2102 to perform various tasks, such as for receiving and processing data sent by the gateway computing device 104. Additionally, an operating system 2110 may control and manage various functions of the management computing device 102. In some cases, the functional components may be stored in a storage portion of the computer-readable media 2104, loaded into a local memory portion of the computer-readable media 2104, and executed by the one or more processors 2102. Numerous other software and/or hardware configurations will be apparent to those of skill in the art having the benefit of the disclosure herein.

In addition, the computer-readable media 2104 may store data and data structures used for performing the functions and services described herein. For example, the computer-readable media 2104 may store sensed data 2112 and sensor location information 2114 received from the gateway computing device 104. In some examples, management application 2108 may perform analysis of the received sensed data 2112 and the sensor location information 2114 to generate an analysis result 2116. The management computing device 102 may also include or maintain other modules and data 2118, which may include programs, drivers, etc., and other data used or generated by the functional components. Further, the management computing device 102 may include many other logical, programmatic, and physical components, of which those described above are merely examples that are related to the discussion herein.

The communication interface(s) 2106 may include one or more interfaces and hardware components for enabling communication with various other devices, such as over the one or more networks 110. Thus, the communication interfaces 2106 may include, or may couple to, one or more ports that provide connection to the network(s) 110 for communicating with the gateway computing device 104 or other computing devices. For example, the communication interface(s) 2106 may enable communication through one or more of a LAN (local area network), WAN (wide area network), the Internet, cable networks, cellular networks, wireless networks (e.g., Wi-Fi) and wired networks (e.g., fiber optic, Ethernet, Fibre Channel,), direct connections, as well as close-range communications such as BLUETOOTH®, and the like, as additionally enumerated elsewhere herein.

In addition, the management computing device 102 may include one or more input/output (I/O) devices 2120.

Such I/O devices 2120 may include a display, speakers, a microphone, and various user controls (e.g., buttons, a joystick, a mouse, a keyboard, a keypad, a touch screen, etc.), and so forth.

The example processes described herein are only examples of processes provided for discussion purposes. Numerous other variations will be apparent to those of skill in the art in light of the disclosure herein. Further, while the disclosure herein sets forth several examples of suitable frameworks, architectures and environments for executing the processes, the implementations herein are not limited to the particular examples shown and discussed. Furthermore, this disclosure provides various example implementations, as described and as illustrated in the drawings. However, this disclosure is not limited to the implementations described and illustrated herein, but can extend to other implementations, as would be known or as would become known to those skilled in the art.

Various instructions, processes, and techniques described herein may be considered in the general context of computer-executable instructions, such as program modules stored on computer-readable media, and executed by the processor(s) herein. Generally, program modules include routines, programs, objects, components, data structures, executable code, etc., for performing particular tasks or implementing particular abstract data types. These program modules, and the like, may be executed as native code or may be downloaded and executed, such as in a virtual machine or other just-in-time compilation execution environment. Typically, the functionality of the program modules may be combined or distributed as desired in various implementations. An implementation of these modules and techniques may be stored on computer storage media or transmitted across some form of communication media.

Although the subject matter has been described in language specific to structural features and/or methodological acts, it is to be understood that the subject matter defined in the appended claims is not necessarily limited to the specific features or acts described. Rather, the specific features and acts are disclosed as example forms of implementing the claims.

The following numbered clauses set out further aspects of the present invention.

A1. A system comprising:

one or more processors; and
one or more non-transitory computer-readable media maintaining executable instructions, which, when executed by the one or more processors, program the one or more processors to perform operations comprising:

receiving sensed data information sent in a transmission from a first sensor, the sensed data information including a sensor identifier (ID) and sensed data of the first sensor;
associating a first timestamp with the sensed data information;
receiving signal strength information including signal strength data related to the transmission and a second timestamp corresponding to detection of the transmission;
determining a first location based at least partially on the signal strength data; and
associating the first location with the sensor ID based on comparing the first timestamp with the second timestamp.

A2. The system as recited in clause A1, wherein the operation of receiving the signal strength information comprises receiving respective signal strength information from at least two other sensors having known locations, wherein the respective signal strength information is indicative of a respective distance from an individual one of the other sensors to the first sensor.

A3. The system as recited in clause A2, wherein the operation of determining the first location based at least partially on the signal strength data comprises using at least one of triangulation or trilateration to determine the location.

A4. The system as recited in clause A2, wherein the operation of determining the first location based at least partially on the signal strength data comprises:

determining a plurality of preliminary locations based on different combinations of the signal strength data received from at least two other sensors; and
combining the plurality of preliminary locations to determine the first location.

A5. The system as recited in clause A1, the operations further comprising:

comparing the first timestamp with the second timestamp; and
determining that the signal strength information and the first location are associated with the transmission based on the first timestamp being within a threshold time of the second time stamp.

A6. The system as recited in clause A1, wherein the transmission is a first transmission sent by the first sensor, the received signal strength information is first signal strength information, and the sensed data information is received in a second transmission sent by a second sensor, the operations further comprising:

receiving second signal strength information including signal strength data related to the second transmission and a third timestamp corresponding to detection of the second transmission, wherein the third timestamp is within a first threshold time of the first timestamp;
determining a second location based on the second signal strength information; and
associating the first location with the sensor ID based on at least one of:

determining that the second location is more than a threshold distance from the first location; or
determining that the first timestamp is within a second threshold time of the second time stamp and outside the first threshold time of the second timestamp.

A7. The system as recited in clause A1, the operations further comprising:

determining that one or more previously determined locations associated with the sensor ID are within a threshold distance of the first location;
averaging the first location with the previously determined locations to determine a recalculated location; and
sending the recalculated location and the sensed data information to a computing device over a network.

A8. A method comprising:

receiving, by a processor, sensed data information including a sensor identifier (ID) and sensed data sent in a transmission from a first sensor;
associating a first timestamp with the sensed data information;
receiving signal strength information including signal strength data related to the transmission and a second timestamp;
determining a first location based at least partially on the signal strength data; and
associating the first location with the sensor ID based on comparing the first timestamp with the second timestamp.

A9. The method as recited in clause A8, wherein receiving the signal strength information comprises receiving respective signal strength information from at least two other sensors having known locations, wherein the respective signal strength information is indicative of a respective distance from an individual one of the other sensors to the first sensor.

A10. The method as recited in clause A9, wherein determining the first location based at least partially on the signal strength data comprises using at least one of triangulation or trilateration to determine the location.

A11. The method as recited in clause A9, wherein determining the first location based at least partially on the signal strength data comprises:

determining a plurality of preliminary locations based on different combinations of the signal strength data received from at least two other sensors; and
combining the plurality of preliminary locations to determine the first location.

A12. The method as recited in clause A8, further comprising:

comparing the first timestamp with the second timestamp; and
determining that the signal strength information and the first location are associated with the transmission based on the first timestamp being within a threshold time of the second time stamp.

A13. The method as recited in clause A8, wherein the transmission is a first transmission sent by the first sensor, the received signal strength information is first signal strength information, and the sensed data information is received in a second transmission sent by a second sensor, the method further comprising:

receiving second signal strength information including signal strength data related to the second transmission and a third timestamp corresponding to detection of the second transmission, wherein the third timestamp is within a first threshold time of the first timestamp;
determining a second location based on the second signal strength information; and
associating the first location with the sensor ID based on at least one of:

determining that the second location is more than a threshold distance from the first location; or
determining that the first timestamp is within a second threshold time of the second time stamp and outside the first threshold time of the second timestamp.

A14. The method as recited in clause A8, further comprising:

determining that one or more previously determined locations associated with the sensor ID are within a threshold distance of the first location;
averaging the first location with the previously determined locations to determine a recalculated location; and
sending the recalculated location and the sensed data information to a computing device over a network.

A15. A system comprising:

a plurality of sensors, each sensor including a processor and an interface for wireless communication, wherein a first sensor of the plurality of sensors is configured to:

detect a first signal strength of a radio signal of a first transmission by a second sensor of the plurality of sensors, the transmission including sensed data information;
associate a first timestamp with the detected first signal strength; and
send, to a computing device, first signal strength information including the detected first signal strength, the first timestamp, and a sensor identifier of the first sensor.

A16. The system as recited in clause A15, wherein the first sensor is further configured to:

detect a second signal strength of a second transmission by a third sensor of the plurality of sensors to forward the sensed data information to the computing device;
associate a second timestamp with the detected second signal strength; and
send, to a computing device, second signal strength information including the detected second signal strength, the second timestamp, and a sensor identifier of the first sensor.

A17. The system as recited in clause A16, wherein the first sensor is further configured to:

receive sensed data from a sensing component associated with the first sensor;
associate a data timestamp with the sensed data;
send, to the computing device, sensed data information including the sensed data, the data timestamp, and the sensor ID of the first sensor.

A18. The system as recited in clause A15, wherein the computing device is configured to:

receive the first signal strength information including the first signal strength data; and
determine a location of the second sensor based at least partially on the signal strength data and at least partially on a location of the first sensor.

A19. The system as recited in clause A18, wherein the computing device is further configured to associate the signal strength data and the location with the second sensor based at least partially on the first timestamp.

A20. The system as recited in clause A15, wherein the first sensor is further configured to:

detect the first signal strength by determining that the signal strength exceeds a threshold level that indicates a beginning of the first transmission;
record a timestamp associated with the beginning of the first transmission;
determine that the signal strength has fallen below a threshold level that indicates an end of the first transmission;
record a timestamp associated with the end of the first transmission; and

determine the first timestamp based at least in part on at least one of the timestamp associated with the beginning of the transmission or the timestamp associated with the end of the transmission.

**Claims**

1. A system comprising:

   one or more processors; and
   one or more non-transitory computer-readable media maintaining executable instructions, which, when executed by the one or more processors, program the one or more processors to perform operations comprising:

   receiving sensed data information sent in a transmission from a first sensor, the sensed data information including a sensor identifier (ID) and sensed data of the first sensor;
   associating a first timestamp with the sensed data information;
   receiving signal strength information including signal strength data related to the transmission and a second timestamp corresponding to detection of the transmission;
   determining a first location based at least partially on the signal strength data; and
   associating the first location with the sensor ID based on comparing the first timestamp with the second timestamp.

2. The system as recited in claim 1, wherein the operation of receiving the signal strength information comprises receiving respective signal strength information from at least two other sensors having known locations, wherein the respective signal strength information is indicative of a respective distance from an individual one of the other sensors to the first sensor.

3. The system as recited in claim 2, wherein the operation of determining the first location based at least partially on the signal strength data comprises using at least one of triangulation or trilateration to determine the location.

4. The system as recited in claim 2, wherein the operation of determining the first location based at least partially on the signal strength data comprises:

   determining a plurality of preliminary locations based on different combinations of the signal strength data received from at least two other sensors; and
   combining the plurality of preliminary locations to determine the first location.

5. The system as recited in claim 1, the operations further comprising:

   comparing the first timestamp with the second timestamp; and
   determining that the signal strength information and the first location are associated with the transmission based on the first timestamp being within a threshold time of the second time stamp.

6. The system as recited in claim 1, wherein the transmission is a first transmission sent by the first sensor, the received signal strength information is first signal strength information, and the sensed data information is received in a second transmission sent by a second sensor, the operations further comprising:

   receiving second signal strength information including signal strength data related to the second transmission and a third timestamp corresponding to detection of the second transmission, wherein the third timestamp is within a first threshold time of the first timestamp;
   determining a second location based on the second signal strength information; and
   associating the first location with the sensor ID based on at least one of:

   determining that the second location is more than a threshold distance from the first location; or
   determining that the first timestamp is within a second threshold time of the second time stamp and outside the first threshold time of the second timestamp.

7. The system as recited in claim 1, the operations further comprising:

determining that one or more previously determined locations associated with the sensor ID are within a threshold distance of the first location;

averaging the first location with the previously determined locations to determine a recalculated location; and

sending the recalculated location and the sensed data information to a computing device over a network.

8. A method comprising:

receiving, by a processor, sensed data information including a sensor identifier (ID) and sensed data sent in a transmission from a first sensor;

associating a first timestamp with the sensed data information;

receiving signal strength information including signal strength data related to the transmission and a second timestamp;

determining a first location based at least partially on the signal strength data; and

associating the first location with the sensor ID based on comparing the first timestamp with the second timestamp.

9. The method as recited in claim 8, wherein the transmission is a first transmission sent by the first sensor, the received signal strength information is first signal strength information, and the sensed data information is received in a second transmission sent by a second sensor, the method further comprising:

receiving second signal strength information including signal strength data related to the second transmission and a third timestamp corresponding to detection of the second transmission, wherein the third timestamp is within a first threshold time of the first timestamp;

determining a second location based on the second signal strength information; and

associating the first location with the sensor ID based on at least one of:

determining that the second location is more than a threshold distance from the first location; or

determining that the first timestamp is within a second threshold time of the second time stamp and outside the first threshold time of the second timestamp.

10. A system comprising:

a plurality of sensors, each sensor including a processor and an interface for wireless communication, wherein a first sensor of the plurality of sensors is configured to:

detect a first signal strength of a radio signal of a first transmission by a second sensor of the plurality of sensors, the transmission including sensed data information;

associate a first timestamp with the detected first signal strength; and

send, to a computing device, first signal strength information including the detected first signal strength, the first timestamp, and a sensor identifier of the first sensor.

11. The system as recited in claim 10, wherein the first sensor is further configured to:

detect a second signal strength of a second transmission by a third sensor of the plurality of sensors to forward the sensed data information to the computing device;

associate a second timestamp with the detected second signal strength; and

send, to a computing device, second signal strength information including the detected second signal strength, the second timestamp, and a sensor identifier of the first sensor.

12. The system as recited in claim 11, wherein the first sensor is further configured to:

receive sensed data from a sensing component associated with the first sensor;

associate a data timestamp with the sensed data;

send, to the computing device, sensed data information including the sensed data, the data timestamp, and the sensor ID of the first sensor.

13. The system as recited in claim 10, wherein the computing device is configured to:

receive the first signal strength information including the first signal strength data; and
determine a location of the second sensor based at least partially on the signal strength data and at least partially on a location of the first sensor.

14. The system as recited in claim 13, wherein the computing device is further configured to associate the signal strength data and the location with the second sensor based at least partially on the first timestamp.

15. The system as recited in claim 10, wherein the first sensor is further configured to:

detect the first signal strength by determining that the signal strength exceeds a threshold level that indicates a beginning of the first transmission;
record a timestamp associated with the beginning of the first transmission;
determine that the signal strength has fallen below a threshold level that indicates an end of the first transmission;
record a timestamp associated with the end of the first transmission; and
determine the first timestamp based at least in part on at least one of the timestamp associated with the beginning of the transmission or the timestamp associated with the end of the transmission.

100

—110

FIG. 1

200

| MANAGEMENT COMPUTING DEVICE 102 | GATEWAY COMPUTING DEVICE 104 | 108(2) UNMANAGED SENSOR Y | 106(1) MANAGED SENSOR A | 106(2) MANAGED SENSOR B | 108(1) UNMANAGED SENSOR X |

t1d

SENSED DATA (#X, t1d, data-1)          202                                   t1x

t1g

DETECTED SS (#A, t1a, SS-1a)          204                                   t1a

DETECTED SS (#B, t1b, SS-1b)                                                t1b

LOCATION (#X, location)
                    208

t2d

SENSED DATA (#Y, t2d, data-2)         210                                   t2y

t2g

DETECTED SS (#B, t2b, SS-2b)                                                t2b

DETECTED SS (#A, t2a, SS-2a)         212                                    t2a
                    214

LOCATION (#Y, location)
                    216

t3d

SENSED DATA (#X, t3d, data-3)         218                                   t3x

t3g

DETECTED SS (#A, t3a, SS-3a)         220                                    t3a

DETECTED SS (#B, t3b, SS-3b)                                                t3b
                    222

LOCATION (#X, location)
224

**FIG. 2**

**FIG. 3**

SENSED DATA
INFORMATION
430

SIGNAL
STRENGTH
INFORMATION
418

MANAGED SENSOR 106

SENSING
BLOCK 404

SEND SENSED DATA
INFORMATION
432

CREATE SENSED
DATA INFORMATION
428

DETERMINE
TIMESTAMP
426

RECEIVE SENSED
DATA FROM SENSING
COMPONENT
424

SENSED DATA
422

SENSING
COMPONENT
420

MONITORING
BLOCK 402

SEND SIGNAL
STRENGTH
INFORMATION
416

CREATE SIGNAL
STRENGTH
INFORMATION
414

DETERMINE
TIMESTAMP
412

RECORD SIGNAL
PROPERTIES
410

DETECT SIGNAL
FROM OTHER
SENSOR
406

RADIO SIGNAL
408

FIG. 4

GATEWAY COMPUTING DEVICE 104

GATEWAY APPLICATION 502

LOCATION MANAGEMENT BLOCK 508

SEND LOCATION DATA AND SENSOR ID TO THE MANAGEMENT COMPUTING DEVICE 530

STORE LOCATION DATA 528

RECALCULATE LOCATION 526

LOCATION CALCULATION BLOCK 506

ASSOCIATE LOCATION WITH ID OF SENSOR THAT SENT SENSED DATA INFO BASED ON TIMESTAMPS 524

CALCULATE LOCATION OF SENSOR THAT SENT SENSED DATA BASED ON SIGNAL STRENGTH 522

DETERMINE RELATED SS INFORMATION BASED ON COMPARING TIMESTAMP IN SS INFO WITH OTHER STORED TIMESTAMPS IN OTHER SS INFO 520

RECEIVE SS INFO FROM MANAGED SENSORS AND STORE IN STORAGE 518

ID ASSOCIATION BLOCK 504

DETERMINE SS DATA RELATED TO SENSED DATA BASED ON SENSOR ID AND TIMESTAMP OF THE SENSED DATA INFO AND TIMESTAMPS IN SS INFO 516

FORWARD SENSED DATA INFO TO MANAGEMENT COMPUTING DEVICE 514

DETERMINE A TIMESTAMP FOR THE RECEIVED SENSED DATA INFORMATION 512

RECEIVE AND STORE SENSED DATA INFO FROM MANAGED OR UNMANAGED SENSORS 510

SIGNAL STRENGTH INFORMATION 418

SENSED DATA INFORMATION 430

FIG. 5

600

MONITOR SIGNAL STRENGTH (SS) OF RADIO SIGNALS
602

DOES DETECTED SS EXCEED THRESHOLD THAT INDICATES BEGINNING OF A TRANSMISSION?
604

No

YES

RECORD A TIMESTAMP OF THE BEGINNING OF THE TRANSMISSION
606

DETERMINE AND STORE THE PROPERTIES OF THE TRANSMISSION, E.G., FREQUENCY AND MODULATION
608

IS THE DETECTED SS BELOW A THRESHOLD THAT INDICATES END OF A TRANSMISSION?
610

No

YES

RECORD TIMESTAMP OF END OF TRANSMISSION
612

SEND SS INFORMATION WITH TIMESTAMPS AND ID OF MONITORING MANAGED SENSOR TO THE GATEWAY
614

FIG. 6

700

| RECEIVE SENSED DATA INFORMATION 702 | RECEIVE SS INFORMATION FROM ONE OR MORE MANAGED SENSORS 706 |
|---|---|

EXTRACT SENSED DATA WITH THE ID OF THE REPORTING UNMANAGED SENSOR AND ASSOCIATE A GATEWAY TIMESTAMP 704

EXTRACT THE SS DATA AND ONE OR MORE ASSOCIATED TIMESTAMPS, WITH AN ID OF THE MANAGED SENSOR 708

COMPARE TIMESTAMP OF SS DATA WITH TIME STAMP OF OTHER RECEIVED SS DATA FROM OTHER MANAGED SENSOR(S) HAVING TIMESTAMP WITHIN A THRESHOLD TIME 710

DETERMINE ONE OR MORE LOCATIONS FOR THE REPORTING SENSOR THAT SENT THE SENSED DATA INFORMATION FOR POSSIBLE COMBINATIONS OF RECEIVED SS INFORMATION 712

DETERMINE THE MEAN OF THE CALCULATED LOCATIONS OF THE REPORTING SENSOR 714

COMPARE TIMESTAMPS OF SS DATA WITH THE GATEWAY TIMESTAMP OF THE RECEIVED SENSED DATA TO ASSOCIATE THE SENSOR ID WITH RESPECTIVE SS DATA HAVING THE SAME TIMESTAMP AND/OR SIGNAL PROPERTIES 716

DETERMINE, FROM HISTORICAL SENSOR LOCATION DATA, A LIST OF PREVIOUS SENSOR LOCATIONS FOR SENSORS HAVING THE SAME SENSOR ID AS THE REPORTING SENSOR 718

IF THE HISTORIC LOCATIONS ARE WITHIN A THRESHOLD DISTANCE OF THE CALCULATED LOCATION, INCREASE ACCURACY OF THE LOCATION OF THE TARGET SENSOR BASED ON THE PREVIOUSLY DETERMINED SENSOR LOCATIONS 720

SEND THE LOCATION OF THE REPORTING SENSOR TO THE MANAGEMENT COMPUTING DEVICE ALONG WITH SENSOR ID OF THE REPORTING SENSOR AND THE GATEWAY TIMESTAMP 722

FIG. 7

800

FIG. 8

**FIG. 9**

1000

**FIG. 10**

1100

| Com# | Timestamp at Gtwy | Timestamp | Sensor ID | Data (temp °F) |
|------|-------------------|-----------|-----------|----------------|
| 1 | 01:00:01 | 01:00:00 | X | 61 |
| 2 | 01:01:02 | 01:01:00 | Y | 61 |
| 3 | 02:00:01 | 02:00:00 | X | 62 |
| ⋮ | ⋮ | ⋮ | ⋮ | ⋮ |

1102 1104 1106 1108 1110

# FIG. 11

1200

1202  1204  1206  1208

| Seq. # | Timestamp | Sensor ID | Data (SS[dBm]) |
|--------|-----------|-----------|----------------|
| 1 | 01:00:01 | A | -40 |
| 2 | 01:00:01 | B | -50 |
| 3 | 01:00:01 | C | -30 |
| 4 | 01:01:02 | A | -45 |
| 5 | 01:01:02 | B | -25 |
| 6 | 01:01:02 | D | -55 |
| 7 | 02:00:01 | A | -40 |
| 8 | 02:00:01 | B | -50 |
| 9 | 02:00:01 | C | -30 |
| 10 | 02:00:01 | E | -55 |
| ⋮ | ⋮ | ⋮ | ⋮ |

# FIG. 12

1300

1312   1314   1316   1318

| Item # | Timestamp | SS Data | Location |
|--------|-----------|---------|----------|
| 1 | 01:00:01 | A: -40, B: -50, C: -30 | P1 |
| 2 | 01:01:02 | A: -45, B: -55, D: -40 | P2 |
| 3 | 02:00:01 | A: -40, B: -50, C: -30 | P3 |
| 4 | 02:00:01 | B:-50, C:-30, E:-55 | P4 |
| 5 | 02:00:01 | C:-30, E:-55, A:-40 | P5 |
| 6 | 02:00:01 | E: -55, A: -40, B: -50 | P6 |
| ⋮ | ⋮ | ⋮ | ⋮ |

1302

1322   1324   1326

| Item # | Timestamp | Reporting Sensor ID |
|--------|-----------|---------------------|
| 1 | 01:00:01 | X |
| 2 | 01:01:02 | Y |
| 3 | 02:00:01 | X |
| ⋮ | ⋮ | ⋮ |

1304

1332   1334   1336

| Item # | Timestamp | Location |
|--------|-----------|----------|
| 1 | 01:00:01 | $Px1 = P1$ |
| 2 | 01:01:02 | $Py1 = P2$ |
| 3 | 02:00:01 | $Px2 = (P3 + P4 + P5 + P6) / 4$ |
| ⋮ | ⋮ | ⋮ |

1306

1342   1344   1346

| Item # | Sensor ID | Location |
|--------|-----------|----------|
| 1 | X | $Px = Px1$ |
| 2 | Y | $Py = Py1$ |
| 3 | X | $Px = (Px1 + Px2) / 2$ |

# FIG. 13

1400

**FIG. 14**

1500

RECEIVE SENSED DATA INFORMATION
1502

RECEIVE SS INFORMATION FROM ONE OR MORE MANAGED SENSORS 1506

EXTRACT SENSED DATA WITH THE ID OF THE REPORTING UNMANAGED SENSOR AND ASSOCIATE A GATEWAY TIMESTAMP 1504

EXTRACT THE SS DATA AND ONE OR MORE ASSOCIATED TIMESTAMPS, WITH AN ID OF THE MANAGED SENSOR 1508

COMPARE TIMESTAMP OF SS DATA WITH TIME STAMP OF OTHER RECEIVED SS DATA FROM OTHER MANAGED SENSOR(S) HAVING TIMESTAMP WITHIN A THRESHOLD TIME
1510

DETERMINE ONE OR MORE LOCATIONS FOR THE REPORTING SENSOR THAT SENT THE SENSED DATA INFORMATION FOR POSSIBLE COMBINATIONS OF RECEIVED SS INFORMATION
1512

DETERMINE THE MEAN OF THE CALCULATED LOCATIONS OF THE REPORTING SENSOR
1514

IS THERE SENSED DATA WITH SAME TIMESTAMP AS SS DATA?
1516

No

Yes

ASSOCIATE SENSOR ID WITH SS DATA AND FOR SS DATA WITH CONTIGUOUS TIMESTAMPS, SHIFT SENSOR ID ASSOCIATION TO CONTIGUOUS PREVIOUS SS DATA
1518

IS A SENSOR ID ASSOCIATED WITH THE SS DATA? 1520

No

STORE THE SS DATA AND THE CALCULATED LOCATION
1522

Yes

DETERMINE, FROM HISTORICAL SENSOR LOCATION DATA, A LIST OF PREVIOUS SENSOR LOCATIONS FOR SENSORS HAVING THE SAME SENSOR ID AS THE REPORTING SENSOR
1524

IF THE HISTORIC LOCATIONS ARE WITHIN A THRESHOLD DISTANCE OF THE CALCULATED LOCATION, INCREASE ACCURACY OF THE LOCATION OF THE TARGET SENSOR BASED ON THE PREVIOUSLY DETERMINED SENSOR LOCATIONS
1526

SEND THE LOCATION OF THE REPORTING SENSOR TO THE MANAGEMENT COMPUTING DEVICE ALONG WITH SENSOR ID OF THE REPORTING SENSOR AND THE GATEWAY TIMESTAMP
1528

**FIG. 15**

1600

| Com# | Timestamp at Gtwy | Timestamp | Sensor ID | Data (temp °F) |
|------|-------------------|-----------|-----------|----------------|
| 1 | 01:00:02 | 01:00:00 | X | 61 |
| 2 | 02:00:01 | 02:00:00 | Y | 62 |
| ⋮ | ⋮ | ⋮ | ⋮ | ⋮ |

1602　1604　1606　1608　1610

# FIG. 16

1700

1702  1704  1706  1708

| Com# | Timestamp | Sensor ID | Data (SS[dBm]) |
|------|-----------|-----------|----------------|
| 1 | 01:00:01 | A | -40 |
| 2 | 01:00:01 | B | -50 |
| 3 | 01:00:01 | C | -30 |
| 4 | 01:00:02 | A | -45 |
| 5 | 01:00:02 | B | -25 |
| 6 | 01:00:02 | D | -55 |
| 7 | 02:00:01 | A | -45 |
| 8 | 02:00:01 | B | -25 |
| 9 | 02:00:01 | D | -55 |
| 10 | 02:00:01 | E | -65 |
| ⋮ | ⋮ | ⋮ | ⋮ |

# FIG. 17

1800

1812  1814  1816  1818

| Item # | Timestamp | SS Data | Location |
|--------|-----------|---------|----------|
| 1 | 01:00:01 | A: -40, B: -50, C: -30 | P1 |
| 2 | 01:00:02 | A: -45, B: -55, D: -40 | P2 |
| 3 | 02:00:01 | A: -45, B: -25, D: -55 | P3 |
| 4 | 02:00:01 | B:-25, D:-55, E:-65 | P4 |
| 5 | 02:00:01 | D:-55, E:-65, A:-45 | P5 |
| 6 | 02:00:01 | E: -65, A: -45, B: -25 | P6 |
| ⋮ | ⋮ | ⋮ | ⋮ |

1802

1822  1824  1826

| Item # | Timestamp | Reporting Sensor ID |
|--------|-----------|---------------------|
| 1 | 01:00:01 | X |
| 2 | 01:00:02 | unknown |
| 3 | 02:00:01 | Y |
| ⋮ | ⋮ | ⋮ |

1804

1832  1834  1836

| Item # | Timestamp | Location |
|--------|-----------|----------|
| 1 | 01:00:01 | Px1 = P1 |
| 2 | 01:00:02 | Pu1 = P2 |
| 3 | 02:00:01 | Py1 = (P3 + P4 + P5 + P6) / 4 |
| ⋮ | ⋮ | ⋮ |

1806

1842  1844  1846

| Item # | Target ID | Location |
|--------|-----------|----------|
| 1 | X | Px = Px1 |
| 2 | Y | Py = Py1 |
| ⋮ | ⋮ | ⋮ |

## FIG. 18

GATEWAY COMPUTING DEVICE
104

| PROCESSOR(S) 1902 | CLOCK 1922 |

COMPUTER-READABLE MEDIA
1904

GATEWAY APPLICATION
502

| OPERATING SYSTEM 1908 | OTHER MODULES AND DATA 1918 |

| SENSED DATA INFORMATION 1910 | SIGNAL STRENGTH DATA 1912 |

| LOCATION DATA 1914 | ID ASSOCIATION DATA 1916 |

| COMMUNICATION INTERFACE(S) 1906 | INPUT/OUTPUT DEVICES 1920 |

# FIG. 19

MANAGED SENSOR
106

PROCESSOR(S)
2002

CLOCK
2016

COMPUTER-READABLE MEDIUM
2004

SENSOR MGMT INSTRUCTIONS
2008

SIGNAL STRENGTH MGMT
INSTRUCTIONS 2010

SENSOR DATA
2012

SIGNAL STRENGTH DATA
2014

SENSING COMPONENT
420

COMMUNICATION INTERFACE(S)
2006

# FIG. 20

MANAGEMENT COMPUTING DEVICE
102

PROCESSOR(S)
2102

COMPUTER-READABLE MEDIA
2104

MANAGEMENT APPLICATION
2108

ANALYSIS RESULTS
2116

OPERATING SYSTEM
2110

OTHER MODULES AND DATA
2118

SENSED DATA
2112

SENSOR LOCATION INFORMATION
2114

COMMUNICATION INTERFACE(S)
2106

INPUT/OUTPUT DEVICES
2120

# FIG. 21

Europäisches
Patentamt

European
Patent Office

Office européen
des brevets

## PARTIAL EUROPEAN SEARCH REPORT

under Rule 62a and/or 63 of the European Patent Convention.
This report shall be considered, for the purposes of
subsequent proceedings, as the European search report

**Application Number**

EP 17 19 4808

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2016/137657 A1 (QUALCOMM INC [US]) 1 September 2016 (2016-09-01) * paragraph [0081] - paragraph [0093] * * paragraph [0101] - paragraph [0128] * ----- | 1-9 | INV. G01S5/02 H04W64/00 |
| X | US 2016/266234 A1 (PEARCE STEPHEN [US]) 15 September 2016 (2016-09-15) * paragraph [0043] - paragraph [0085] * ----- | 1-9 | |

**TECHNICAL FIELDS SEARCHED (IPC)**

G01S
H04W
G06F
H04B

### INCOMPLETE SEARCH

The Search Division considers that the present application, or one or more of its claims, does/do not comply with the EPC so that only a partial search (R.62a, 63) has been carried out.

Claims searched completely :

Claims searched incompletely :

Claims not searched :

Reason for the limitation of the search:

see sheet C

| Place of search | Date of completion of the search | Examiner |
|---|---|---|
| Berlin | 24 May 2018 | Kalabic, Faris |

EPO FORM 1503 03.82 (P04E07)

Europäisches
Patentamt

European
Patent Office

Office européen
des brevets

**INCOMPLETE SEARCH
SHEET C**

Claim(s) completely searchable:
       1-9

Claim(s) not searched:
       10-15

Reason for the limitation of the search:

In accordance with the letter dated 18.04.2018 (response to the
invitation pursuant to Rule 62a(1) EPC; Multiple independent claims

**EP 3 343 241 A1**

## ANNEX TO THE EUROPEAN SEARCH REPORT
## ON EUROPEAN PATENT APPLICATION NO.

EP 17 19 4808

This annex lists the patent family members relating to the patent documents cited in the above-mentioned European search report.
The members are as contained in the European Patent Office EDP file on
The European Patent Office is in no way liable for these particulars which are merely given for the purpose of information.

24-05-2018

| Patent document cited in search report | Publication date | Patent family member(s) | Publication date |
|---|---|---|---|
| WO 2016137657 A1 | 01-09-2016 | BR 112017018382 A2 | 17-04-2018 |
| | | CN 107278381 A | 20-10-2017 |
| | | EP 3262877 A1 | 03-01-2018 |
| | | JP 2018506928 A | 08-03-2018 |
| | | KR 20170123622 A | 08-11-2017 |
| | | US 2016255471 A1 | 01-09-2016 |
| | | WO 2016137657 A1 | 01-09-2016 |
| US 2016266234 A1 | 15-09-2016 | NONE | |

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **PIERLOT et al.** A New Three Object Triangulation Algorithm Based on the Power Center of Three Circles. *Research and Education in Robotics (EUROBOT), volume 161 of Communications in Computer and Information Science,* 2011, vol. 161, 248-262